# NEUE EUROPÄISCHE PATENTSCHRIFT

(11) **EP 3 230 181 B2**
(45) Veröffentlichungstag und Bekanntmachung des Hinweises auf die Entscheidung über den Einspruch: **28.07.2021**
(45) Hinweis auf die Patenterteilung: 26.12.2018
(21) Anmeldenummer: 15785117.1
(22) Anmeldetag: 27.10.2015
(51) Int. Cl.: B65G 19/00, B65G 47/28, B65G 54/02, B65B 35/40, B65B 41/02, B65B 41/08, B65B 43/12, B65B 43/48, B65G 19/02

(54) **TRANSPORTVORRICHTUNG FÜR EINE VERPACKUNGSMASCHINE**
TRANSPORTING APPARATUS FOR A PACKAGING MACHINE
DISPOSITIF DE TRANSPORT POUR MACHINE D'EMBALLAGE

(30) Priorität: 11.12.2014 DE 102014225529
(43) Veröffentlichungstag der Anmeldung: 18.10.2017
(73) Patentinhaber: Robert Bosch GmbH, 70442 Stuttgart (DE)
(72) Erfinder: BAECHLE, Andreas, 79736 Rickenbach (DE)
(74) Vertreter: Daub, Thomas
(86) Internationale Anmeldenummer: PCT/EP2015/074829
(87) Internationale Veröffentlichungsnummer: WO 2016/091446

(56) Entgegenhaltungen:
- EP-A1- 0 761 573
- EP-A1- 2 634 100
- EP-A1- 2 743 192
- EP-A1- 2 923 973
- WO-A1-2011/127367
- WO-A1-2013/189656
- DE-A1-102013 105 175
- US-A- 3 047 132
- US-A1- 2012 261 233
- US-A1- 2013 026 005
- US-A1- 2013 247 524

## Beschreibung

Es ist bereits eine Transportvorrichtung für eine Verpackungsmaschine, zum Überführen von Verpackungsgruppen, insbesondere Gruppen von Kartonschachteln und/oder Kartonzuschnitten, entlang einer Transportstrecke aus zumindest einer ersten Verpackungsgruppenanordnung in einem ersten Transportstreckenabschnitt in zumindest eine weitere Verpackungsgruppenanordnung in zumindest einem weiteren Transportstreckenabschnitt vorgeschlagen worden (s. z.B. EP-A-2 634 100), wobei die erste Verpackungsgruppenanordnung und die zumindest eine weitere Verpackungsgruppenanordnung jeweils eine abweichende Teilung aufweisen, mit zumindest zwei in einer Bewegungsebene entlang der Transportstrecke zumindest zwischen dem ersten Transportstreckenabschnitt und dem weiteren Transportstreckenabschnitt in einer Transportrichtung und in einer der Transportrichtung entgegengesetzten Rückholrichtung unabhängig antreibbaren Transporteinheiten, wobei die Transporteinheiten jeweils zumindest ein Mitnahmeelement aufweisen, das dazu vorgesehen ist, in zumindest einem Betriebszustand die jeweilige Transporteinheit mit einer Verpackung der zu überführenden Verpackungsgruppe zumindest während des Überführens vom ersten Transportstreckenabschnitt in den zumindest einen weiteren Transportstreckenabschnitt zu koppeln.

Des Weiteren ist aus EP 2 923 973 A1 bereits eine Transportvorrichtung für eine Verpackungsmaschine, zum Überführen von Verpackungsgruppen, insbesondere Gruppen von Kartonschachteln und/oder Kartonzuschnitten, entlang einer Transportstrecke aus zumindest einer ersten Verpackungsgruppenanordnung in einem ersten Transportstreckenabschnitt in zumindest eine weitere Verpackungsgruppenanordnung (26a) in zumindest einem weiteren Transportstreckenabschnitt bekannt, wobei die erste Verpackungsgruppenanordnung und die zumindest eine weitere Verpackungsgruppenanordnung jeweils eine abweichende Teilung aufweisen. Die aus EP 2 923 973 A1 bereits bekannte Transportvorrichtung umfasst zumindest zwei in einer Bewegungsebene entlang der Transportstrecke zumindest zwischen dem ersten Transportstreckenabschnitt und dem weiteren Transportstreckenabschnitt in einer Transportrichtung und in einer der Transportrichtung entgegengesetzten Rückholrichtung unabhängig antreibbare Transporteinheiten, wobei die Transporteinheiten jeweils zumindest ein Mitnahmeelement aufweisen, das dazu vorgesehen ist, in zumindest einem Betriebszustand die jeweilige Transporteinheit mit einer Verpackung der zu überführenden Verpackungsgruppe zumindest während des Überführens vom ersten Transportstreckenabschnitt in den zumindest einen weiteren Transportstreckenabschnitt zu koppeln, wobei die Mitnahmeelemente an den Transporteinheiten jeweils unabhängig von dem zumindest einen Mitnahmeelement der zumindest einen weiteren Transporteinheit in einer Koppelbewegung mit der mit der jeweiligen Transporteinheit zu koppelnden Verpackung kraft-und/oder formschlüssig koppel- und entkoppelbar gelagert sind, wobei die Mitnahmeelemente unabhängig von ihrer Position entlang der Transportstrecke in der Koppelbewegung antreibbar sind und wobei die Transporteinheiten jeweils zumindest ein aktives Antriebsmittel aufweisen, das dazu vorgesehen ist, das jeweils zumindest eine Mitnahmeelement der jeweiligen Transporteinheit mit der Koppelbewegung anzutreiben.

Ferner sind aus EP 0 761 573 A1, EP 2 743 192 A1 und US 2013/0026005 A1 weitere Transportvorrichtungen für Verpackungsmaschinen, zum Überführen von Verpackungsgruppen bekannt.

Die Erfindung geht aus von einer Transportvorrichtung für eine Verpackungsmaschine, zum Uberführen von Verpackungsgruppen, insbesondere Gruppen von Kartonschachteln und/oder Kartonzuschnitten, entlang einer Transportstrecke aus zumindest einer ersten Verpackungsgruppenanordnung in einem ersten Transportstreckenabschnitt in zumindest eine weitere Verpackungsgruppenanordnung in zumindest einem weiteren Transportstreckenabschnitt, wobei die erste Verpackungsgruppenanordnung und die zumindest eine weitere Verpackungsgruppenanordnung jeweils eine abweichende Teilung aufweisen, mit zumindest zwei in einer Bewegungsebene entlang der Transportstrecke zumindest zwischen dem ersten Transportstreckenabschnitt und dem weiteren Transportstreckenabschnitt in einer Transportrichtung und in einer der Transportrichtung entgegengesetzten Rückholrichtung unabhängig antreibbaren Transporteinheiten, wobei die Transporteinheiten jeweils zumindest ein Mitnahmeelement aufweisen, das dazu vorgesehen ist, in zumindest einem Betriebszustand die jeweilige Transporteinheit mit einer Verpackung der zu überführenden Verpackungsgruppe zumindest während des Überführens vom ersten Transportstreckenabschnitt in den zumindest einen weiteren Transportstreckenabschnitt zu koppeln, wobei die Mitnahmeelemente an den Transporteinheiten jeweils unabhängig von dem zumindest einen Mitnahmeelement der zumindest einen weiteren Transporteinheit in einer Koppelbewegung mit der mit der jeweiligen Transporteinheit zu koppelnden Verpackung kraft-und/oder formschlüssig koppel- und entkoppelbar gelagert sind, wobei die Mitnahmeelemente unabhängig von ihrer Position entlang der Transportstrecke in der Koppelbewegung antreibbar sind und wobei die Transporteinheiten jeweils zumindest ein aktives Antriebsmittel aufweisen, das dazu vorgesehen ist, das jeweils zumindest eine Mitnahmeelement der jeweiligen Transporteinheit mit der Koppelbewegung anzutreiben.

Es wird vorgeschlagen, dass die Mitnahmeelemente an den Transporteinheiten um eine zur Transportrichtung senkrechte, zur Bewegungsebene parallele Rotationsachse in der Koppelbewegung drehbar gelagert sind oder dass die Mitnahmeelemente in einer gegenüber der Bewegungsebene um einen Winkel geneigten Koppelbewegung antreibbar gelagert sind.

### Stand der Technik

Unter einer "Verpackungsgruppe" soll in diesem Zusammenhang insbesondere eine Mehrzahl von Verpackungen wie Verpackungsbehältern und/oder Verpackungsbehälterzuschnitten verstanden werden. Unter einem "Verpackungsbehälterzuschnitt" soll in diesem Zusammengang insbesondere ein Zuschnitt aus einem flächigen Material verstanden werden, aus dem durch Formen und/oder Falten ein Verpackungsbehälter gebildet wird. Bevorzugt können die Verpackungen von Kartonschachteln und/oder Kartonzuschnitten gebildet werden. Die Kartonzuschnitte sind bevorzugt als Flachzuschnitte ausgebildet. Die Flachzuschnitte sind bevorzugt von einem flächigen Kartonmaterial gebildet, welches eingeprägte Faltlinien aufweist. Die Faltlinien reduzieren ein Biegemoment des Flachzuschnitts quer zur Faltlinie und erleichtern ein exaktes Aufrichten des Flachzuschnitts. Bevorzugt werden die Kartonschachteln aus den Kartonzuschnitten durch Aufrichten gebildet. Unter "Aufrichten" soll in diesem Zusammenhang ein, dem Fachmann bekannter Prozess verstanden werden, bei dem aus den Kartonzuschnitten durch Falten und Leimen die Kartonschachtel gebildet wird.

Unter einer "Verpackungsgruppenanordnung " soll in diesem Zusammenhang eine Anzahl Verpackungen verstanden werden, die in einer Ordnung angeordnet sind. Insbesondere können die Verpackungen in Richtung der Transportstrecke in einer bevorzugt regelmäßigen Teilung angeordnet sein. Unter einer "Teilung" soll in diesem Zusammenhang ein Abstand verstanden werden, in dem die Verpackungen in Teilungsrichtung, in diesem Fall in Richtung der Transportstrecke, angeordnet sind. Die Teilung wird bevorzugt von einer zur Teilungsrichtung senkrechten Mittelebene einer Verpackung bis zu einer in derselben Richtung orientierten Mittelebene einer in Teilungsrichtung nächsten Verpackung gemessen. Unter einem "Transportstreckenabschnitt" soll in diesem Zusammenhang insbesondere ein Streckenabschnitt der Transportstrecke verstanden werden, in dem die Verpackungen in einer bestimmten Verpackungsgruppenanordnung angeordnet sind und/oder durch die Transportvorrichtung angeordnet werden sollen. Die Transportstrecke weist zumindest einen ersten und einen weiteren Transportstreckenabschnitt auf; insbesondere können die Verpackungen in dem ersten Transportstreckenabschnitt in der ersten Verpackungsgruppenanordnung angeliefert werden. Die erste Verpackungsgruppenanordnung kann zum Beispiel eine Teilung aufweisen, die einer Länge der Verpackungen in Transportrichtung entspricht, das heißt die Verpackungen sind "auf Stoß" angeordnet, so dass sie einander berühren. Es ist ebenfalls möglich, dass die Verpackungen in eine geschindelte Verpackungsgruppenanordnung gebracht werden. Unter einer "geschindelten Verpackungsgruppenanordnung" soll in diesem Zusammenhang insbesondere eine Verpackungsgruppenanordnung verstanden werden, bei der sich die einzelnen Verpackungen in Transportrichtung überlappen. Insbesondere können von den Verpackungen seitlich abstehende Laschen, wie Verschlusslaschen, benachbarter Verpackungen überlappend angeordnet sein. Die Transportvorrichtung kann dazu vorgesehen sein, die Verpackungen in den weiteren Transportstreckenabschnitt mit jeweils unterschiedlichen Verpackungsgruppenanordnungen mit jeweils unterschiedlichen Teilungen zu überführen, so dass die Verpackungen in einem Abstand angeordnet sind. Dies kann zum Beispiel ein Befüllen und/oder Verschließen der Verpackungen erleichtern. Vorteilhaft kann entlang der Transportstrecke eine Mehrzahl von Transportstreckenabschnitten mit jeweils unterschiedlichen Verpackungsgruppenanordnungen und Teilungen angeordnet sein. Die Transportstreckenabschnitte können dazu vorgesehen sein, Verpackungszuschnitte zu Verpackungen zu formen, die Verpackungen zu befüllen und/oder die Verpackungen zu verschließen. Es sind auch weitere Arten von Transportstreckenabschnitten und/oder weitere Operationen möglich, die in diesen Transportstreckenabschnitten ausgeführt werden. Insbesondere kann ein Transportstreckenabschnitt Leimauftragemittel aufweisen, um Leim auf die Verpackungen aufzutragen. Dies kann insbesondere erfolgen, bevor die Verpackungen in einem weiteren Transportstreckenabschnitt verschlossen werden. Die Transportvorrichtung kann dazu vorgesehen sein, die Verpackungsgruppen entlang der Transportstrecke in der jeweils dem jeweiligen Transportstreckenabschnitt angepassten Verpackungsgruppenanordnung zu überführen. Die Transportvorrichtung kann dazu vorgesehen sein, die Verpackungsgruppen und/oder einzelne Verpackungen entlang der Transportstrecke zwischen einer Mehrzahl von Transportstreckenabschnitten mit angepassten Verpackungsgruppenanordnungen in Transportrichtung und/oder in Rückholrichtung zu transportieren. Unter einer "Bewegungsebene" soll in diesem Zusammenhang insbesondere eine zur Transportstrecke parallele Ebene verstanden werden, entlang der sich die Transporteinheit in der Transportrichtung und/oder der Rückholrichtung bewegt. Insbesondere ist die Transporteinheit an der Transportstrecke mit einer Linearlagereinheit so gelagert, dass sie in Transportrichtung parallel zur Bewegungsebene beweglich ist. Bevorzugt sind die Transporteinheiten in einer gemeinsamen Bewegungsebene antreibbar. Eine Lagerung der Transporteinheiten kann besonders einfach sein. Es ist ebenfalls möglich, dass die Transporteinheiten jeweils in abweichenden, zueinander in einer senkrechten Richtung versetzten Bewegungsebenen antreibbar sind. Unter "koppeln" soll in diesem Zusammenhang insbesondere verstanden werden, dass das Mitnahmeelement eine Kraft und/oder Position und/oder Bewegung in und/oder entgegen der Transportrichtung von der Transporteinheit auf die Verpackung überträgt, um die Verpackung in oder entgegen der Transportrichtung anzutreiben. Ein gekoppelter Zustand soll in diesem Zusammenhang bevorzugt dadurch gekennzeichnet sein, dass sich das Transportelement und die mit dem Transportelement gekoppelte Verpackung synchron bewegen. Unter einer "Koppelbewegung" soll in diesem Zusammenhang eine Bewegung verstanden werden, in der die Mitnahmeelement mit der jeweiligen Verpackung in einen Kraft- und/oder Formschluss gebracht werden können. Unter "unabhängig von dem zumindest einen Mitnahmeelement der zumindest einen weiteren Transporteinheit in einer Koppelbewegung mit der mit der jeweiligen Transporteinheit zu koppelnden Verpackung kraft- und/oder formschlüssig koppel- und entkoppelbar gelagert" soll in diesem Zusammenhang insbesondere verstanden werden, dass diese Mitnahmeelemente unabhängig von weiteren Mitnahmeelementen weiterer Transporteinheiten die zu einer Koppelung mit einer weiteren Verpackung vorgesehen sind in der Koppelbewegung koppel- oder entkoppelbar sind. Die Verpackungen können voneinander unabhängig mit Mitnahmeeinheiten und/oder Transporteinheiten gekoppelt werden. Bevorzugt sind alle Mitnahmeelemente voneinander unabhängig in der Koppelbewegung antreibbar gelagert. Es ist in einer vereinfachten Ausführung der Erfindung auch möglich, dass Mitnahmeelemente, die dazu vorgesehen sind, gemeinsam mit einer Verpackung kraft- und/oder formschlüssig gekoppelt und/oder entkoppelt zu werden, gemeinsam in der Koppelbewegung antreibbar gelagert sind.

Durch die erfindungsgemäße Ausgestaltung der Transportvorrichtung können die Verpackungsgruppen besonders flexibel aus der ersten in die weitere Verpackungsgruppenanordnung überführt werden. Insbesondere können die Verpackungsgruppenanordnungen unterschiedliche Teilungen aufweisen. Insbesondere können benachbarte Verpackungen innerhalb der Verpackungsgruppenanordnung unterschiedliche Teilungen aufweisen. Das heißt, Verpackungen einer Verpackungsgruppenanordnung können abweichende Abstände aufweisen. Insbesondere können Verpackungen einer Verpackungsgruppenanordnung in Teilungsrichtung unterschiedliche Längen aufweisen. Die Teilungen können vorteilhaft ausgeglichen und/oder erzeugt werden, indem die Mitnahmeelemente mit den Verpackungen gekoppelt und/oder entkoppelt werden, wenn sich Transporteinheiten in geeigneten Positionen relativ zu den Verpackungen befinden. Die unterschiedlichen Teilungen können durch eine geeignete Ansteuerung von Antriebseinheiten der Transporteinheiten und von Koppelbewegungen der Mitnahmeelemente erzeugt werden. Mechanische Formatumstellungen zum Erzeugen unterschiedlicher Teilungen können entfallen. Die Transportvorrichtung kann besonders effizient und/oder flexibel sein.

Insbesondere können Antriebsmittel dazu vorgesehen sein, die Mitnahmeelemente unabhängig von ihrer Position entlang der Transportstrecke in der Koppelbewegung anzutreiben. Die Koppelbewegung kann positionsunabhängig über Anlenkmittel auf die Transporteinheiten und/oder die Mitnahmeelemente übertragen werden. Die Transporteinheiten können unabhängig von ihrer Position mit den Verpackungen gekoppelt werden. Die Transportvorrichtung kann besonders flexibel sein. Insbesondere kann die Transportvorrichtung Abweichungen von Verpackungspositionen in den Verpackungsgruppenanordnungen besonders einfach ausgleichen. Bevorzugt kann die Transportvorrichtung zumindest einen Sensor aufweisen, der dazu vorgesehen ist, Verpackungspositionen zu erfassen. Insbesondere kann zumindest eine Transporteinheit einen Sensor zum Erfassen von Verpackungspositionen aufweisen. Der Sensor kann zum Beispiel ein optischer Sensor, wie eine Lichtschranke, oder ein Näherungssensor sein. Die Transporteinheit kann Verpackungen und/oder Verpackungspositionen erkennen, wenn sie sich in Transportrichtung oder in Rückholrichtung an einer Verpackung vorbei bewegt. Die Transporteinheit kann an einer mit der Verpackungsposition abgestimmten Position mit der Verpackung gekoppelt werden. Eine Steuereinheit der Transportvorrichtung kann dazu vorgesehen sein, die Verpackungspositionen zu erfassen und die Transporteinheiten an den angepassten Positionen mit den Verpackungen zu koppeln. Die Transportvorrichtung kann besonders zuverlässig und fehlertolerant sein. Insbesondere kann die Transportvorrichtung Abweichungen von Verpackungspositionen kompensieren.

Die Transporteinheiten weisen jeweils zumindest ein aktives Antriebsmittel auf; das dazu vorgesehen ist, das jeweils zumindest eine Mitnahmeelement der jeweiligen Transporteinheit mit der Koppelbewegung anzutreiben. Unter einem "aktiven" Antriebsmittel soll in diesem Zusammenhang insbesondere ein Antriebsmittel verstanden werden, das dazu vorgesehen ist, die Koppelbewegung mit Hilfe einer Energieumwandlung zu erzeugen, wie ein Pneumatikzylinder oder bevorzugt ein elektrischer Antrieb wie ein Servomotor oder bevorzugt ein Hubmagnet. Weist die Transporteinheit mehrere Mitnahmeelemente auf; können diese von einem gemeinsamen Antriebsmittel in der Koppelbewegung angetrieben werden. Es können Antriebsmittel eingespart werden. Vorteilhaft weist jedes Mitnahmeelement ein Antriebsmittel zum Antreiben der Koppelbewegung auf. Die Mitnahmeelemente können zeitlich verzögert mit der Verpackung gekoppelt werden. Zum Beispiel kann zunächst das am der Transportrichtung abgewandten Ende der Transporteinheit angeordnete Mitnahmeelement gekoppelt werden. In einem nächsten Schritt kann die Transporteinheit in Transportrichtung bewegt werden, zumindest bis die Verpackung sicher am gekoppelten Mitnahmeelement anliegt. In einem nächsten Schritt kann das am der Transportrichtung zugewandten Ende der Transporteinheit angeordnete Mitnahmeelement gekoppelt werden. Die Mitnahmeelemente können sicher mit der Verpackung gekoppelt werden, auch wenn sie gegenüber einer erwarteten Sollposition in Transportrichtung verschoben ist. Die Mitnahmeelemente können besonders dynamisch in der Koppelbewegung angetrieben werden. Der Antrieb der Koppelbewegung kann eine besonders geringe Masse aufweisen.

Weiter wird vorgeschlagen, dass jeweils zwei Mitnahmeelemente mit einer der zu koppelnden Verpackungen an in Transportrichtung entgegengesetzten Enden der Verpackung formschlüssig koppelbar sind. Ein Mitnahmeelement kann die Funktion eines Halters und das weitere Mitnahmeelement die Funktion eines Gegenhalters aufweisen. Halter und Gegenhalter können in Transportrichtung entgegengesetzte Kräfte auf die Verpackung ausüben. Die beiden Mitnahmeelemente können die Verpackung zumindest spielarm koppeln. Unter "spielarm" soll in diesem Zusammenhang insbesondere verstanden werden, dass ein Abstand in Transportrichtung zwischen den beiden Mitnahmeelementen um weniger als 1mm größer, bevorzugt weniger als 0,5mm größer ist als die Länge der Verpackung in dieser Richtung. Die Kopplung kann die Position der Transporteinheit besonders präzise auf die Verpackungsposition übertragen. Bevorzugt kann die Verpackung im gekoppelten Zustand zwischen den beiden Mitnahmeelementen eingeklemmt werden. Unter "geklemmt" soll in diesem Zusammenhang insbesondere verstanden werden, dass ein Abstand in Transportrichtung zwischen den beiden Mitnahmeelementen etwas geringer ist als die Länge der Verpackung in dieser Richtung, so dass die Verpackung und/oder die Mitnahmeelemente in oder entgegen der Transportrichtung leicht elastisch verformt werden und die Verpackung auf die Mitnahmeelemente Gegenkräfte ausübt. Die Verpackung kann mit dem Transportelement besonders sicher und/oder spielfrei gekoppelt werden. Es kann ebenfalls möglich sein, dass die Mitnahmeelemente eine aus einem Verpackungszuschnitt geformte Verpackung durch beidseitiges Klemmen sichern. Dies kann insbesondere vermeiden, dass eine Verpackung, welche noch nicht verklebt ist oder deren Verklebung noch nicht belastbar ist, sich unerwünscht auffaltet.

Besonders bevorzugt sind die jeweils zwei mit einer Verpackung formschlüssig koppelbaren Mitnahmeelemente in Transportrichtung unabhängig antreibbar. Insbesondere können die Mitnahmeelemente auf jeweils eigenen, unabhängig antreibbaren Transporteinheiten gelagert sein. Bevorzugt können die Transporteinheiten durch unabhängige Linearmotoren angetrieben sein. Ein Abstand zwischen den Mitnahmeelementen beim Klemmen von Verpackungen kann besonders flexibel eingestellt werden. Insbesondere kann die Steuereinheit der Transportvorrichtung die Transporteinheiten so ansteuern, dass sie im für die Verpackung geeigneten Abstand mittels ihrer Mitnahmeelemente mit der Verpackung gekoppelt werden. Die beiden Transporteinheiten, die mit einer Verpackung gekoppelt sind, können diese Verpackungen in einer gemeinsamen Transportbewegung überführen.

Alternativ können die jeweils zwei mit einer Verpackung formschlüssig koppelbaren Mitnahmeelemente an einer gemeinsamen Transporteinheit in einem in Transportrichtung einstellbaren Abstand gelagert sein. Bevorzugt kann eine Formatlehre dazu vorgesehen sein, den Abstand der Mitnahmeelemente abhängig von einer Verpackungslänge einzustellen und/oder festzulegen. Ein Bediener der Transportvorrichtung kann den Abstand der Mitnahmeelemente besonders einfach und sicher abhängig von den zu überführenden Verpackungen einstellen und/oder festlegen. Es können gegenüber einem unabhängigen Antrieb jedes Mitnahmeelements in Transportrichtung Antriebe und/oder Transporteinheiten eingespart werden.

Die Koppelbewegung kann eine Rotationsbewegung sein. Bevorzugt weisen die Mitnahmeelemente ausgehend von der Rotationsachse eine Haupterstreckung auf; die in einem gekoppelten Zustand im Wesentlichen parallel zur Transportrichtung ist, sowie in einem von der Rotationsachse abgewandten Endbereich einen Haltefinger mit einer Haltefläche, die in einem gekoppelten Zustand zumindest im Wesentlichen senkrecht zur Transportrichtung in Richtung der Verpackung ausgerichtet ist. Unter "zumindest im Wesentlichen" soll in diesem Zusammenhang insbesondere eine Abweichung von weniger als 20°, bevorzugt von weniger als 10° verstande werden. Die Mitnahmeelemente können bei einer besonders geringen Bauhöhe senkrecht zur Transportrichtung einen besonders großen Radius um die Rotationsachse aufweisen. Die Halteflächen können um eine Kreisbahn mit einem besonders großen Radius bewegt werden. Die Haltefinger der Mitnahmeelemente können besonders gut in einen Abstand in der Koppelbewegung zwischen zwei Verpackungen eingebracht werden. Sind zwei Mitnahmeelemente dazu vorgesehen, eine Verpackung beidseitig zu klemmen, kann die Koppelbewegung in einer Kreisbewegung mit einem großen Radius besonders geeignet sein, um eine Klemmkraft auf die Verpackung auszuüben. Alternativ können die Mitnahmeelemente in Richtung der Verpackung in einer linearen Koppelbewegung ein- und ausfahrbar gelagert sein. Bevorzugt kann eine Bewegungsrichtung der Koppelbewegung von einer Senkrechten zur Transportrichtung abweichen, so dass sich die Mitnahmeelemente beim Koppeln mit der Koppelbewegung der Verpackung annähern. Sind zwei Mitnahmeelemente dazu vorgesehen, eine Verpackung beidseitig zu klemmen, kann die Koppelbewegung eine Klemmkraft bewirken.

Weiter wird eine Verpackungsmaschine mit einer Transportvorrichtung nach einem der vorhergehenden Ansprüche vorgeschlagen. Die Verpackungsmaschine kann die genannten Vorteile aufweisen.

Weiter geht die Erfindung aus von einem Verfahren zum Überführen von Verpackungsgruppen, insbesondere Gruppen von Kartonschachteln und/oder Kartonzuschnitten, entlang einer Transportstrecke aus zumindest einer ersten Verpackungsgruppenanordnung in einem ersten Transportstreckenabschnitt in zumindest eine weitere Verpackungsgruppenanordnung in zumindest einem weiteren Transportstreckenabschnitt, wobei die erste Verpackungsgruppenanordnung und die zumindest eine weitere Verpackungsgruppenanordnung eine abweichende Teilung aufweisen, bei dem zumindest zwei Transporteinheiten in einer gemeinsamen Bewegungsebene entlang der Transportstrecke zumindest zwischen dem ersten Transportstreckenabschnitt und dem weiteren Transportstreckenabschnitt in einer Transportrichtung und in einer der Transportrichtung entgegengesetzten Rückholrichtung unabhängig angetrieben werden und wobei die Transporteinheiten jeweils zumindest ein Mitnahmeelement aufweisen, das dazu vorgesehen ist, eine Verpackung der zu überführenden Verpackungsgruppe zumindest während des Überführens vom ersten Transportstreckenabschnitt in den zumindest einen weiteren Transportstreckenabschnitt individuell anzutreiben, und bei dem die Mitnahmeelemente an den Transporteinheiten jeweils voneinander unabhängig mit der von dem jeweiligen Mitnahmeelement zu koppelnden Verpackung in einer Koppelbewegung kraft- und/oder formschlüssig gekoppelt und/oder entkoppelt werden, wobei die Mitnahmeelemente unabhängig von ihrer Position entlang der Transportstrecke in der Koppelbewegung angetrieben werden und wobei die Transporteinheiten jeweils zumindest ein aktives Antriebsmittel aufweisen, das das jeweils zumindest eine Mitnahmeelement der jeweiligen Transporteinheit mit der Koppelbewegung antreibt. Es wird vorgeschlagen, dass die Mitnahmeelemente an den Transporteinheiten um eine zur Transportrichtung senkrechte, zur Bewegungsebene parallele Rotationsachse in der Koppelbewegung gedreht werden oder dass die Mitnahmeelemente in einer gegenüber der Bewegungsebene um einen Winkel geneigten Koppelbewegung angetrieben werden. Mit dem Verfahren kann die erste Verpackungsgruppenanordnung in die weitere Verpackungsgruppenanordnung überführt werden, wobei die erste und die weitere Teilung durch eine geeignete Ansteuerung der Transporteinheiten und Mitnahmeelemente frei gewählt werden können.

Weiter wird vorgeschlagen, dass in einem Verfahrensschritt in dem ersten Transportstreckenabschnitt mit der Verpackungsgruppe in der ersten Verpackungsgruppenanordnung zumindest ein erstes Mitnahmeelement mit einer entgegen der Transportrichtung ersten Verpackung der Verpackungsgruppe gekoppelt wird und diese Verpackung in Transportrichtung in Richtung des weiteren Transportstreckenabschnitts angetrieben wird und dass in einem weiteren Verfahrensschritt zumindest ein zweites Mitnahmeelement mit einer entgegen der Transportrichtung zweiten Verpackung der Verpackungsgruppe gekoppelt wird und diese zweite Verpackung in Transportrichtung in Richtung des weiteren Transportstreckenabschnitts angetrieben wird. Es können vorteilhaft auch Verpackungsgruppenanordnungen aus einer Teilung überführt werden, die eine geringere Erstreckung in Transportrichtung aufweist als ein minimaler Abstand, mit dem sich zwei Mitnahmeelemente zweier Transporteinheiten annähern können.

Weiter wird vorgeschlagen, dass in einem weiteren Verfahrensschritt das zumindest eine erste Mitnahmeelement von der entgegen der Transportrichtung ersten Verpackung entkoppelt wird und das zumindest eine zweite Mitnahmeelement von der entgegen der Transportrichtung zweiten Verpackung bei Erreichen der weiteren Verpackungsgruppenanordnung im weiteren Transportstreckenabschnitt entkoppelt wird. Es kann vorteilhaft auch eine Verpackungsgruppenanordnung in eine Verpackungsgruppenanordnungen mit einer Teilung überführt werden, die eine geringere Erstreckung in Transportrichtung aufweist als ein minimaler Abstand, mit dem sich zwei Mitnahmeelemente zweier Transporteinheiten annähern können.

Weiter wird vorgeschlagen, dass in einem weiteren Verfahrensschritt die entkoppelten Mitnahmeelemente in einer Rückholrichtung vom weiteren Transportstreckenabschnitt in den ersten Transportstreckenabschnitt überführt werden. Die Transporteinheiten mit den Mitnahmeelementen können in derselben Bewegungsebene in der Transportrichtung die Verpackungsgruppen überführen und in einer Rückführbewegung wieder in den ersten Transportstreckenabschnitt überführt werden. Vorrichtungen, um die Transporteinheiten in einem Rücklauf in einer weiteren Bewegungsebene zurückzuführen, können entfallen. Die Transportvorrichtung kann besonders kompakt und/oder kostengünstig sein.

Die erfindungsgemäße Transportvorrichtung soll hierbei nicht auf die oben beschriebene Anwendung und Ausführungsform beschränkt sein. Insbesondere kann die erfindungsgemäße Transportvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind sieben Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Ausschnitts einer erfindungsgemäßen Transportvorrichtung in einem ersten Ausführungsbeispiel,
- Fig. 2: eine schematische Darstellung einer Transporteinheit der Transportvorrichtung,
- Fig. 3: eine weitere Ansicht einer der Transporteinheiten der Transportvorrichtung,
- Fig. 4: eine schematische Darstellung eines Mitnahmeelements der Transportvorrichtung,
- Fig. 5: eine schematische Darstellung einer Verpackungsgruppe in einer geschindelten und in einer ungeschindelten Verpackungsgruppenanordnung,
- Fig. 6: eine Darstellung eines bevorzugten Verfahrens zum Überführen einer Verpackungsgruppe mit der Transportvorrichtung des ersten Ausführungsbeispiels,
- Fig. 7: eine schematische Darstellung einer nicht erfindungsgemäßen Transportvorrichtung in einem zweiten nicht erfindungsgemäßen Ausführungsbeispiel,
- Fig. 8: eine schematische Darstellung einer nicht erfindungsgemäßen Transportvorrichtung in einem dritten nicht erfindungsgemäßen Ausführungsbeispiel,
- Fig. 9: eine weitere Darstellung der nicht erfindungsgemäßen Transportvorrichtung des dritten nicht erfindungsgemäßen Ausführungsbeispiels,
- Fig. 10: eine dritte Darstellung der nicht erfindungsgemäßen Transportvorrichtung des dritten nicht erfindungsgemäßen Ausführungsbeispiels,
- Fig. 11: eine Darstellung eines nicht erfindungsgemäßen Verfahrens zum Überführen einer Verpackungsgruppe mit der Transportvorrichtung des dritten nicht erfindungsgemäßen Ausführungsbeispiels,
- Fig. 12: eine Darstellung einer Transporteinheit einer nicht erfindungsgemäßen Transportvorrichtung eines vierten nicht erfindungsgemäßen Ausführungsbeispiels,
- Fig. 13: eine Darstellung einer Transporteinheit einer erfindungsgemäßen Transportvorrichtung eines fünften erfindungsgemäßen Ausführungsbeispiels,
- Fig. 14: eine Darstellung einer erfindungsgemäßen Transporteinheit einer Transportvorrichtung eines sechsten erfindungsgemäßen Ausführungsbeispiels und
- Fig. 15: eine Darstellung eines Mitnahmeelements einer erfindungsgemäßen Transportvorrichtung in einem siebenten erfindungsgemäßen Ausführungsbeispiel mit einem Anlenkelement zum Antrieb einer Koppelbewegung.

### Beschreibung der Ausführungsbeispiele

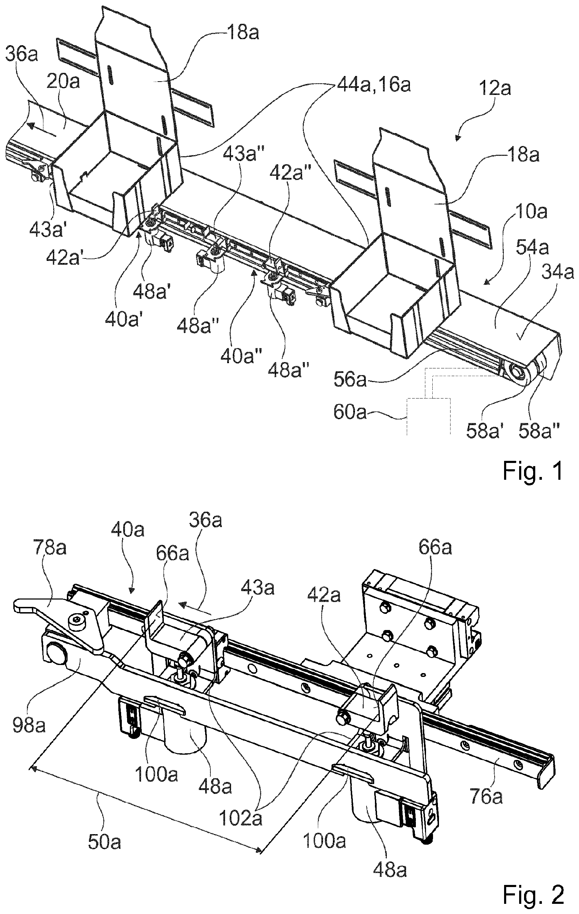

Figur 1 zeigt eine schematische Darstellung eines Ausschnitts einer erfindungsgemäßen Transportvorrichtung 10a für eine Verpackungsmaschine 12a in einem ersten Ausführungsbeispiel.

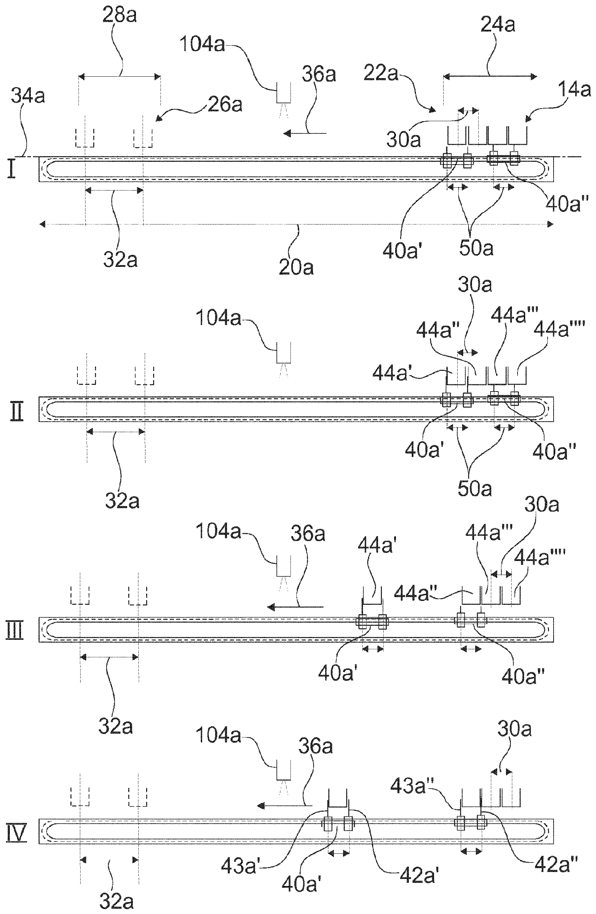

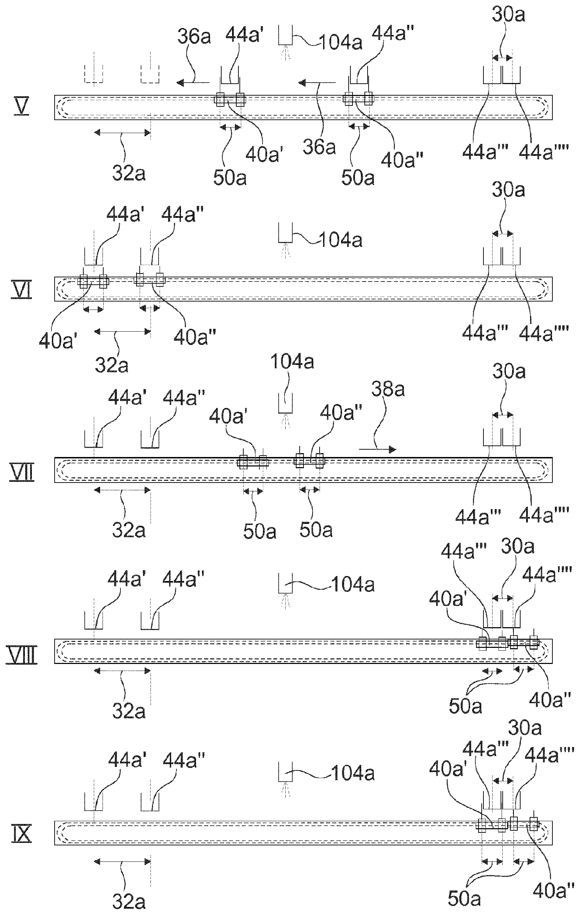

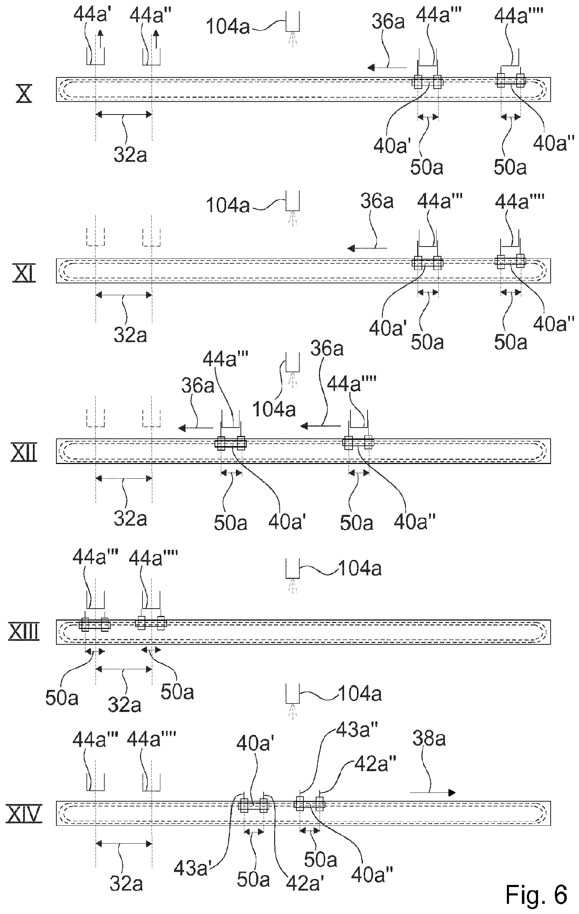

Die Transportvorrichtung 10a ist zum Überführen von Verpackungsgruppen 14a entlang einer Transportstrecke 20a aus einer ersten Verpackungsgruppenanordnung 22a in einem ersten Transportstreckenabschnitt 24a in eine weitere Verpackungsgruppenanordnung 26a in einem weiteren Transportstreckenabschnitt 28a in einem in der Folge beschriebenen Verfahren vorgesehen (Figur 6). Die Verpackungsgruppenanordnungen 22a, 26a weisen dabei jeweils eine abweichende Teilung 30a, 32a auf.

Die Transportvorrichtung 10a weist eine von einem Totblech gebildete Produktauflage 54a auf; auf der die Verpackungsgruppen 14a beim Überführen aufliegen, so dass diese durch die Produktauflage 54a abgestützt werden. Die Verpackungsgruppen 14a werden von aus Kartonzuschnitten 18a geformten Kartonschachteln 16a gebildet. Die Kartonzuschnitte 18a sind im Ausführungsbeispiel Flachzuschnitte, aus denen durch Aufrichten, das heißt Falten, und Kleben, die Kartonschachteln 16a gebildet werden. Es ist mit der Transportvorrichtung 10a auf gleiche Art und Weise wie in der Folge beschrieben auch möglich, Kartonzuschnitte 18a sowie nur teilweise aufgerichtete Kartonschachteln 16a zu überführen. Ebenso ist es möglich, die Transportvorrichtung 10a zum Überführen anderer Behälterarten einzusetzen, wie insbesondere aus Kartonhülsen aufgezogener Verpackungen oder weiterer vergleichbarer Behälter und Gegenstände.

Zwei Transporteinheiten 40a', 40a" sind an einer gemeinsamen Linearführung 56a in einer Bewegungsebene 34a entlang der Transportstrecke 20a zwischen dem ersten Transportstreckenabschnitt 24a und dem weiteren Transportstreckenabschnitt 28a in einer Transportrichtung 36a und in einer der Transportrichtung 36a entgegengesetzten Rückholrichtung 38a unabhängig antreibbar gelagert. Die Bewegungsebene 34a ist parallel zur Produktauflage 54a. Die Transporteinheiten 40a', 40a" werden von jeweils einem umlaufender Zahnriemen 58a', 58a" angetrieben, zu deren Antrieb jeweils hier nicht näher dargestellte Servomotoren vorgesehen sind. Eine Steuereinheit 60a steuert und regelt die Bewegungen der Transporteinheiten 40a', 40a" durch eine geeignete Ansteuerung der Servomotoren.

Die Transporteinheiten 40a', 40a" weisen jeweils zwei jeweils von Antriebsmitteln 48a', 48a" angetriebene Mitnahmeelemente 42a', 43a', 42a", 43a" auf; die dazu vorgesehen sind, jeweils eine Verpackung 44a der zu überführenden Verpackungsgruppe 14a während des Überführens vom ersten Transportstreckenabschnitt 24a in den weiteren Transportstreckenabschnitt 28a mit der jeweiligen Transporteinheit 40a', 40a" zu koppeln. Dabei sind jeweils die zwei Mitnahmeelemente 42a', 43a' der Transporteinheit 40a' oder die zwei Mitnahmeelemente 42a", 43a" der Transporteinheit 40a" mit einer der zu koppelnden Verpackungen 14a an in Transportrichtung 36a entgegengesetzten Enden der Verpackung 44a formschlüssig koppelbar. Die Mitnahmeelemente 42a', 42a" sind jeweils an einem der Transportrichtung 36a entgegengesetzten Ende der Transporteinheiten 40a', 40a" angeordnet und schieben somit die Verpackungen 44a in Transportrichtung 36a. Die Mitnahmeelemente 43a', 43a" sind jeweils an einem in Transportrichtung 36a orientierten Ende der Transporteinheiten 40a', 40a" angeordnet und üben somit eine der Transportrichtung 36a entgegengesetzte Kraft auf die Verpackungen 44a aus, die ein Klemmen der Verpackungen 44a zwischen den Mitnahmeelementen 42a', 43a' beziehungsweise Mitnahmeelementen 42a", 43a" bewirkt, so dass ein Spiel in Transportrichtung 36a vermieden wird und die Verpackungen 44a besonders präzise überführt werden.

Die Mitnahmeelemente 42a', 43a', 42a", 43a" jeder der Transporteinheiten 40a', 40a" sind jeweils unabhängig von dem zumindest einen Mitnahmeelement (42a', 43a', 42a", 43a") der zumindest einen weiteren Transporteinheit (40a', 40a") in einer Koppelbewegung (46a) mit der mit der jeweiligen Transporteinheit (40a', 40a") zu koppelnden Verpackung (44a) kraft- und/oder formschlüssig koppel- und entkoppelbar gelagert. Dabei sind die Mitnahmeelemente 42a', 43a', 42a", 43a" unabhängig von ihrer Position entlang der Transportstrecke 20a in der Koppelbewegung 46a antreibbar.

Der Aufbau der Transporteinheiten 40a ist in Figur 2 bis Figur 4 detailliert dargestellt. Die Transporteinheiten 40a sind im gezeigten Beispiel jeweils identisch aufgebaut, daher wird in der Folge auf eine Unterscheidung zwischen den Transporteinheiten 40a' und 40a" verzichtet. Abhängig von den zu verarbeitenden Verpackungen 44a, insbesondere wenn Verpackungsgruppen überführt werden sollen, bei denen die Verpackungen unterschiedliche Abmessungen aufweisen, kann es vorteilhaft sein, wenn die Transportvorrichtung eine Mehrzahl von unterschiedlichen Transporteinheiten mit jeweils abweichendem Aufbau aufweist. Der Fachmann wird den Aufbau der Transporteinheiten in diesem Fall geeignet festlegen. Die Transporteinheiten 40a weisen jeweils die zwei von einem Hubmagnet gebildeten aktiven Antriebsmittel 48a auf; die dazu vorgesehen sind, jeweils eines der Mitnahmeelemente 42a, 43a der jeweiligen Transporteinheit 40a mit der Koppelbewegung 46a anzutreiben. Die jeweils zu einer Transporteinheit 40a gehörenden Mitnahmeelemente 42a, 43a werden von den Antriebsmitteln 48a im Regelfall synchron angetrieben. Alternativ können die Mitnahmelemente 42a, 43a zeitlich verzögert mit der Verpackung 44a gekoppelt werden. Zum Beispiel kann zunächst das am der Transportrichtung 36a abgewandten Ende der Transporteinheit 40a angeordnete Mitnahmeelement 42a gekoppelt werden. In einem nächsten Schritt kann die Transporteinheit 40a um einige Millimeter in Transportrichtung 36a bewegt werden, zumindest bis die Verpackung 40a sicher am gekoppelten Mitnahmeelement 42a anliegt. In einem nächsten Schritt kann das am der Transportrichtung 36a zugewandten Ende der Transporteinheit 40a angeordnete Mitnahmeelement 43a gekoppelt werden. Die Mitnahmeelemente 42a, 43a werden bei diesem Verfahren sicher mit der Verpackung gekoppelt, auch wenn diese gegenüber einer erwarteten Sollposition in Transportrichtung verschoben ist. Der Fachmann wird das geeignete Verfahren wählen, insbesondere abhängig von einer Positionsgenaugkeit der Verpackungen 44a der zu überführenden Verpackungsgruppen 14a. Sollen die Mitnahmeelemente 42a, 43a einer Transporteinheit 40a nur synchron angetrieben werden, kann der Aufbau der Transporteinheit 40a dahingehend vereinfacht werden, dass ein gemeinsames Antriebsmittel über eine Koppelmechanik beide Mitnahmeelemente 42a, 43a synchron antreibt. Die jeweils zwei mit einer Verpackung 44a formschlüssig koppelbaren Mitnahmeelemente 42a, 43a sind an der gemeinsamen Transporteinheit 40a an jeweils einer Mitnahmebasis 102a gelagert, die in einem in Transportrichtung 36a einstellbaren und festlegbaren Abstand 50a an einer Lagerschiene 76a gelagert ist. Der Abstand 50a wird zwischen einander zugewandten Halteflächen 66a der jeweils an den Transporteinheiten 40a gegenüberliegend angeordneten Mitnahmeelemente 42a, 43a gemessen. Die Verpackungen 44a werden zwischen den Halteflächen 66a geklemmt. Der Abstand 50a lässt sich bevorzugt mit einer Formatlehre 98a einstellen und festlegen, die einer Länge der zu überführenden Verpackungen 44a angepasst ist. Die Formatlehre 98a wird auf die jeweilige Transporteinheit 40a aufgesetzt und durch eine Verriegelung 78a arretiert. Die Formatlehre 98a umgreift an der Mitnahmebasis 102a der jeweiligen Mitnahmeelemente 42a, 43a angeordnete Fortsätze 100a und legt so den Abstand 50a zwischen einander zugewandten Halteflächen 66a der Mitnahmeelemente 42a, 43a fest. Der Abstand 50a wird so gewählt, dass er um einen geringen Betrag, zum Beispiel 1 mm, kleiner ist als die Länge der zu überführenden Verpackungen 44a in Transportrichtung 36a so, dass die Verpackungen 44a in Transportrichtung 36a einfedern und zuverlässig geklemmt werden. In diesem Fall hat die Formatlehre eine Länge, die 1mm kleiner ist als die Länge der zu überführenden Verpackungen 44a.

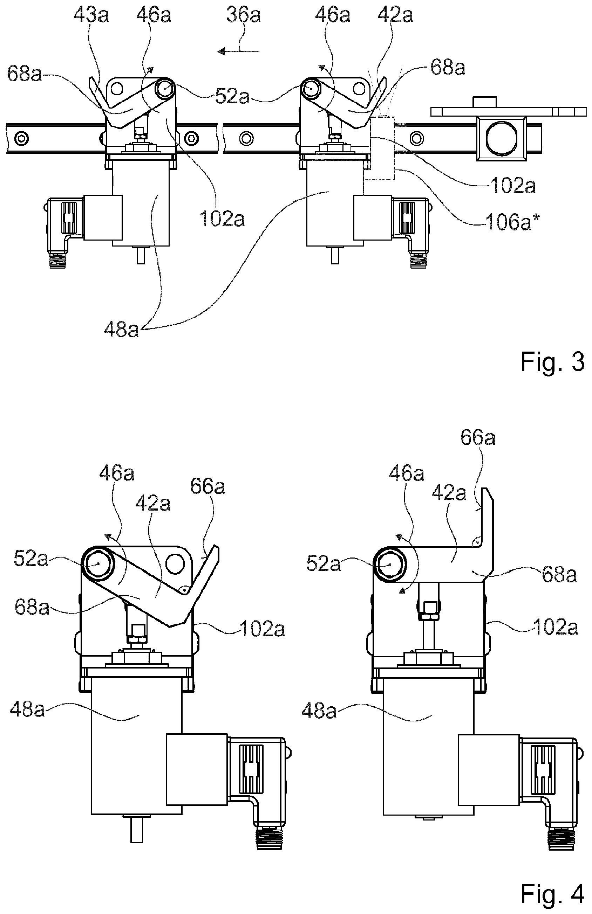

Die Figuren 3 und 4 zeigen den Aufbau der Mitnahmeelemente 42a, 43a. Die Mitnahmeelemente 42a, 43a sind an den jeweiligen Transporteinheiten 40a um eine zur Transportrichtung 36a senkrechte, zur Bewegungsebene 34a parallele Rotationsachse 52a in der Koppelbewegung 46a drehbar gelagert. Die Koppelbewegung 46a stellt damit eine Schwenkbewegung dar, die sicherstellt, dass die Mitnahmeelemente 42a, 43a, in Abstände zwischen zwei Verpackungen 44a einer Verpackungsgruppe 14a eingeschwenkt werden können. Die Mitnahmeelemente 42a, 43a sind an den Transporteinheiten 40a bezogen auf eine zur Transportrichtung 36a senkrechte Mittelebene symmetrisch angeordnet. Hebelarme 68a der Mitnahmeelemente 42a, 43a zeigen bezogen zur Mittelebene von den Rotationsachsen 52a nach außen. Die Halteflächen 66a sind an den Hebelarmen 68a an in einem rechten Winkel angeordnet und in Richtung der Verpackungen 44a orientiert. Durch die Koppelbewegung 46a werden die Mitnahmeelemente 42a, 43a beim Koppeln symmetrisch gegen die Verpackung 44a geschwenkt und die gekoppelte Verpackung 44a wird geklemmt.

In Figur 3 ist die Transporteinheit 40a mit einem optionalen Sensor 106a* dargestellt, der an einem entgegen der Transportrichtung 36a orientierten Ende der Mitnahmebasis 102a des Mitnahmeelements 42a angeordnet ist. Der Sensor 106a* ist als optischer Sensor ausgebildet und erkennt entgegen der Transportrichtung 36a orientierte Kanten der Verpackungen 44a. Der Sensor 106a* ist dazu vorgesehen, Verpackungspositionen zu erfassen. Eine mit dem Sensor 106a* ausgestattete Transporteinheit 40a erkennt Verpackungen 44a und/oder Verpackungspositionen, wenn sie sich in Transportrichtung 36a oder in Rückholrichtung 38a an einer Verpackung 44a vorbei bewegt. Die Transporteinheit 40a wird an einer mit der Verpackungsposition abgestimmten Position mit der Verpackung 44a gekoppelt. Die Steuereinheit 60a der Transportvorrichtung 10a ist dazu vorgesehen, die Verpackungspositionen zu erfassen und die Transporteinheiten 40a an den angepassten Positionen mit den Verpackungen 44a zu koppeln und Abweichungen der Verpackungspositionen zu kompensieren. Der Fachmann wird festlegen, ob es vorteilhaft ist, die Transporteinheiten 40a der Transportvorrichtung 10a mit Sensoren 106a* auszustatten. Dies hängt insbesondere davon ab wie genau Verpackungspositionen der Verpackungen 44a der ersten Verpackungsgruppenanordnung 22a eingehalten werden sollen.

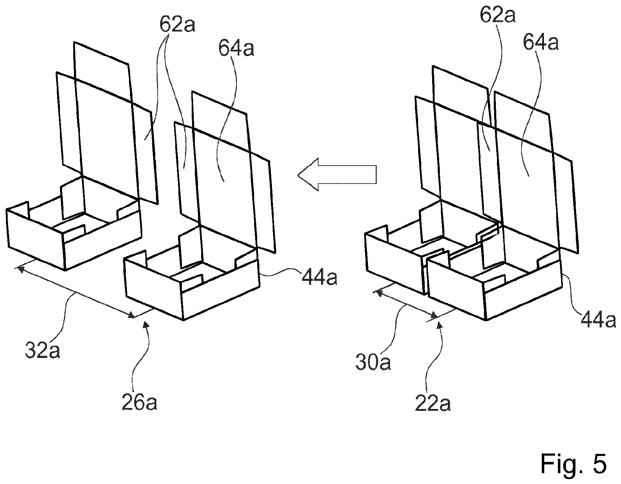

Figur 5 zeigt die unterschiedlichen Teilungen 30a, 32a der Verpackungen 44a in der ersten Verpackungsgruppenanordnung 22a in der ersten Teilung 30a und der zweiten Verpackungsgruppenanordnung 26a in der weiteren Teilung 32a. In der ersten Verpackungsgruppenanordnung 22a sind die Verpackungen 44a in einer geschindelten Verpackungsgruppenanordnung 22a angeordnet, in der sich Laschen 62a eines Deckelteils 64a in Transportrichtung 36a benachbarter Verpackungen 44a überlappen. Dabei bleibt ein Abstand zwischen den geschindelten Verpackungen 44a in Transportrichtung ausreichend groß, dass ein Mitnahmeelement 42a zwischen die Verpackungen 44a eingebracht werden kann. Die weitere Verpackungsgruppenanordnung 26a weist eine größere Teilung 32a auf; in der die Verpackungen 44a in Transportrichtung 36a einen Abstand aufweisen.

Figur 6 zeigt in einer vereinfachten Prinzipdarstellung Schritte eines bevorzugten Verfahrens zum Überführen der Verpackungsgruppen 14a. Im beschriebenen Beispiel wird eine Verpackungsgruppe 14a mit vier Verpackungen 44a' - 44a"" überführt. Das Verfahren kann abhängig von der ersten Verpackungsgruppenanordnung 22a und der weiteren Verpackungsgruppenanordnung 26a, die durch das Überführen erzeugt werden soll, angepasst werden. Insbesondere können auch einzelne Schritte des Verfahrens zusammengefasst werden. Die Verpackungsgruppen 14a sind in der ersten Verpackungsgruppenanordnung 22a in dem ersten Transportstreckenabschnitt 24a angeordnet und werden in die weitere Verpackungsgruppenanordnung 26a in den weiteren Transportstreckenabschnitt 28a überführt, wobei die erste Verpackungsgruppenanordnung 22a und die weitere Verpackungsgruppenanordnung 26a eine jeweils abweichende Teilung 30a, 32a aufweisen. Die zwei Transporteinheiten 40a', 40a" werden in der gemeinsamen Bewegungsebene 34a entlang der Transportstrecke 20a zwischen dem ersten Transportstreckenabschnitt 24a und dem weiteren Transportstreckenabschnitt 28a in der Transportrichtung 36a und in der der Transportrichtung 36a entgegengesetzten Rückholrichtung 38a unabhängig angetrieben. Die Transporteinheiten 40a', 40a" weisen jeweils die zwei Mitnahmeelemente 42a', 43a', 42a", 43a" auf; wobei immer zwei auf einer der Transporteinheiten 40a', 40a" angeordnete Mitnahmeelemente 42a', 43a', 42a", 43a" dazu vorgesehen sind, eine Verpackung 44a' - 44a"" der zu überführenden Verpackungsgruppe 14a während des Überführens vom ersten Transportstreckenabschnitt 24a in den weiteren Transportstreckenabschnitt 28a individuell anzutreiben. Die Mitnahmeelemente 42a', 43a', 42a", 43a" werden jeweils voneinander unabhängig mit der mit der jeweiligen Transporteinheit 40a', 40a" zu koppelnden Verpackung 44a in der Koppelbewegung 46a kraft- und/oder formschlüssig gekoppelt und/oder entkoppelt. Weiter werden in einem Verfahrensschritt in dem ersten Transportstreckenabschnitt 24a mit der Verpackungsgruppe 14a in der ersten Verpackungsgruppenanordnung 22a zwei erste Mitnahmeelemente 42a', 43a' mit einer entgegen der Transportrichtung 36a ersten Verpackung 44a' der Verpackungsgruppe 14a gekoppelt, diese Verpackung 44a wird dann in Transportrichtung 36a in Richtung des weiteren Transportstreckenabschnitts 28a angetrieben und in einem weiteren Verfahrensschritt werden zwei zweite Mitnahmeelemente 42a", 43a" mit einer entgegen der Transportrichtung 36a zweiten Verpackung 44a" der Verpackungsgruppe 14a gekoppelt und diese zweite Verpackung 44a wird in Transportrichtung 36a in Richtung des weiteren Transportstreckenabschnitts 28a angetrieben. In einem weiteren Verfahrensschritt werden die beiden ersten Mitnahmeelemente 42a', 43a' von der entgegen der Transportrichtung 36a ersten Verpackung 44a'" und die beiden zweiten Mitnahmeelemente 42a", 43a" von der entgegen der Transportrichtung 36a zweiten Verpackung 44a"" bei Erreichen der weiteren Verpackungsgruppenanordnung 26a im weiteren Transportstreckenabschnitt 28a entkoppelt. Weiter werden in einem weiteren Verfahrensschritt die entkoppelten Mitnahmeelemente 42a', 43a', 42a", 43a" in der Rückholrichtung 38a vom weiteren Transportstreckenabschnitt 28a in den ersten Transportstreckenabschnitt 24a überführt.

In der Folge werden die einzelnen Verfahrensschritte beschrieben:
In einem ersten Schritt wird die Transporteinheit 40a' im ersten Transportstreckenabschnitt 24a, in dem die vier Verpackungen 44a' - 44a"" in der ersten Verpackungsgruppenanordnung 22a mit der ersten Teilung 30a angeordnet sind, in der Bewegungsebene 34a in Transportrichtung 36a zentrisch zur entgegen der Transportrichtung 36a ersten Verpackung 44a' bewegt (Figur 6-I). Verfügen die Transporteinheiten 40a', 40a" über Sensoren 106a*, werden diese genutzt, um die Positionen der Transporteinheiten 40a', 40a" auf Verpackungspositionen der Verpackungen 44a abzustimmen. In einem weiteren Schritt werden die Mitnahmeelemente 42a', 43a' in der Koppelbewegung 46a mit der Verpackung 44a' gekoppelt (Figur 6-II). In einem weiteren Schritt überführt die Transporteinheit 40a' die Verpackung 44a' in der Transportrichtung 36a in Richtung des weiteren Transportstreckenabschnitts 28a. Die Transporteinheit 40a" wird im ersten Transportstreckenabschnitt 24a in Transportrichtung 36a zentrisch zur entgegen der Transportrichtung 36a nächsten Verpackung 44a" bewegt (Figur 6-III). In einem weiteren Schritt werden die Mitnahmeelemente 42a", 43a" mit der Verpackung 44a" gekoppelt. Die Transporteinheit 40a' überführt die Verpackung 44a' weiter in der Transportrichtung 36a in Richtung des weiteren Transportstreckenabschnitts 28a (Figur 6-IV). In einem weiteren Schritt überführt die Transporteinheit 40a" die Verpackung 44a" in der Transportrichtung 36a in Richtung des weiteren Transportstreckenabschnitts 28a. Die Transporteinheit 40a' überführt die Verpackung 44a' weiter in der Transportrichtung 36a in Richtung des weiteren Transportstreckenabschnitts 28a. Entlang der Transportstrecke 20a zwischen den Transportstreckenabschnitten 24a und 28a ist ein Leimauftragemittel 104a angeordnet, in diesem Fall Leimdüsen eines Heißleimgeräts. Während die Verpackungen 44a' - 44a"" an dem Leimauftragemittel 104a vorbeibewegt werden, erfolgt ein Leimauftrag. Der Leimauftrag dient einem späteren Verschließen der Verpackungen 44a' - 44a"" im Bereich des Transportstreckenabschnitts 28a durch einen nicht näher dargestellten Verschließer. Im hier beschriebenen Schritt wurde die Verpackung 44a' bereits am Leimauftragemittel 104a vorbeibewegt und mit Leim versehen, die Verpackung 44a" befindet sich entgegen der Transportrichtung 36a noch vor dem Leimauftragemittel 104a (Figur 6-V). In einem weiteren Schritt erreichen die Transporteinheiten 40a' und 40a" mit den Verpackungen 44a', 44a" Sollpositionen im Transportstreckenabschnitt 28a, in dem die Verpackungen 44a', 44a" in der weiteren Teilung 32a der weiteren Verpackungsgruppenanordnung 26a angeordnet sind. Die Mitnahmeelemente 42a', 43a' und 42a", 43a" werden von den Verpackungen 44a' und 44a" entkoppelt (Figur 6-VI). In einem weiteren Schritt werden die Transporteinheiten 40a' und 40a" in der Rückholrichtung 38a in den ersten Transportstreckenabschnitt 24a überführt (Figur 6-VII). In einem weiteren Schritt wird die Transporteinheit 40a' im ersten Transportstreckenabschnitt 24a in Transportrichtung 36a zentrisch zur entgegen der Transportrichtung 36a dritten Verpackung 44a'" bewegt (Figur 6-VIII). In einem weiteren Schritt werden die Mitnahmeelemente 42a', 43a' in der Koppelbewegung 46a mit der Verpackung 44a'" gekoppelt (Figur 6-IX). In einem weiteren Schritt überführt die Transporteinheit 40a' die Verpackung 44a'" in der Transportrichtung 36a in Richtung des weiteren Transportstreckenabschnitts 28a. Die Transporteinheit 40a" wird im ersten Transportstreckenabschnitt 24a in Transportrichtung 36a zentrisch zur entgegen der Transportrichtung 36a vierten Verpackung 44a"" bewegt. Gleichzeitig werden die Verpackungen 44a', 44a" durch eine hier nicht näher dargestellte Weitertransporteinheit vom Transportstreckenabschnitt 28a entfernt (Figur 6-X). In einem weiteren Schritt werden die Mitnahmeelemente 42a", 43a" in der Koppelbewegung 46a mit der Verpackung 44a"" gekoppelt. Die Transporteinheit 40a' überführt die Verpackung 44a'" weiter in der Transportrichtung 36a in Richtung des weiteren Transportstreckenabschnitts 28a (Figur 6-XI). In einem weiteren Schritt überführt die Transporteinheit 40a" die Verpackung 44a"" in der Transportrichtung 36a in Richtung des weiteren Transportstreckenabschnitts 28a. Die Transporteinheit 40a' überführt die Verpackung 44a'" weiter in der Transportrichtung 36a in Richtung des weiteren Transportstreckenabschnitts 28a (Figur 6-XII) In einem weiteren Schritt erreichen die Transporteinheiten 40a' und 40a" mit den Verpackungen 44a'", 44a"" Sollpositionen im Transportstreckenabschnitt 28a, in dem die Verpackungen 44a' - 44a"" in der weiteren Teilung 32a der weiteren Verpackungsgruppenanordnung 26a angeordnet sind. Die Mitnahmeelemente 42a', 43a' und 42a", 43a" werden von den Verpackungen 44a'" und 44a"" entkoppelt (Figur 6-XIII). In einem weiteren Schritt werden die Transporteinheiten 40a' und 40a" in der Rückholrichtung 38a in den ersten Transportstreckenabschnitt 24a überführt. Die Verpackungen 44a' - 44a"" sind von der ersten Verpackungsgruppenanordnung 22a im ersten Transportstreckenabschnitt 24a in die weitere Verpackungsgruppenanordnung 26a im weiteren Transportstreckenabschnitt 28a überführt (Figur 6-XIV).

Dieses Verfahren kann abhängig von der Anzahl der zu überführenden Verpackungen 44a in gleicher Weise weiter fortgesetzt werden.

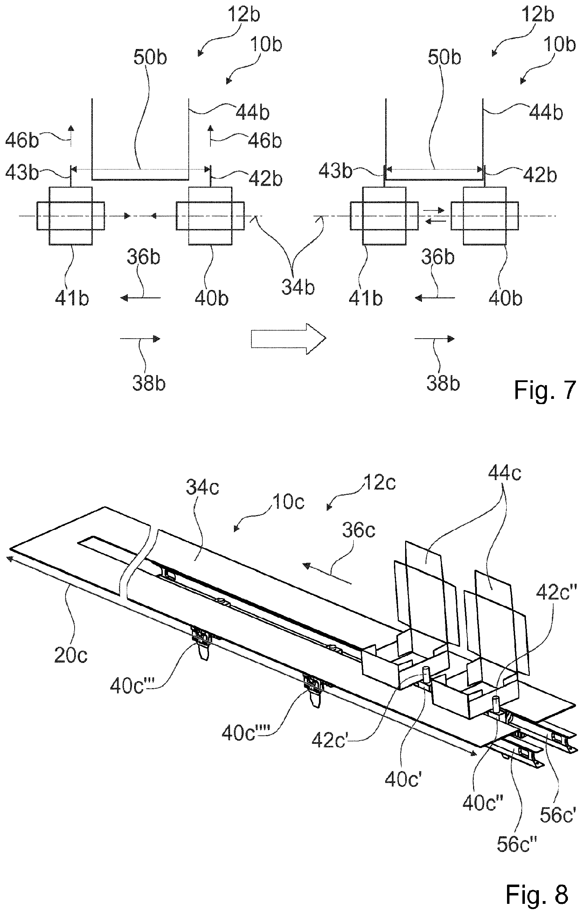

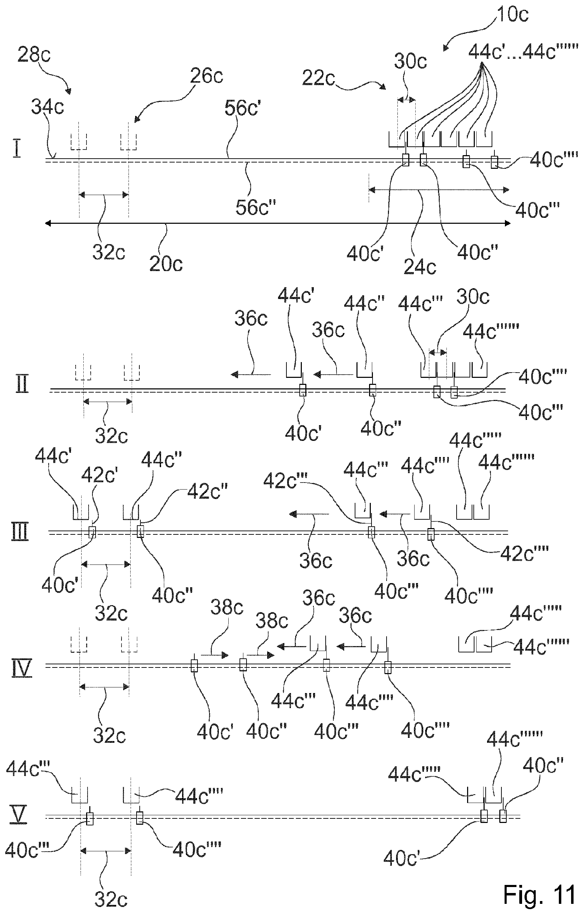

In den Figuren 7 bis 15 sind weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 bis 15 ist der Buchstabe a durch die Buchstaben b bis g ersetzt.

Figur 7 zeigt eine schematische Darstellung eines Ausschnitts einer nicht erfindungsgemäßen Transportvorrichtung 10b für eine Verpackungsmaschine 12b in einem zweiten nicht erfindungsgemäßen Ausführungsbeispiel. Die Transportvorrichtung 10b des zweiten Ausführungsbeispiels unterscheidet sich von der Transportvorrichtung 10a des ersten Ausführungsbeispiels insbesondere dadurch, dass jeweils zwei mit einer Verpackung 44b formschlüssig koppelbare Mitnahmeelemente 42b, 43b in Transportrichtung 36b unabhängig antreibbar sind. Ein Abstand 50b zwischen den Mitnahmeelementen 42b, 43b kann frei eingestellt werden, indem die Mitnahmeelemente 42b, 43b geeignet angetrieben werden. Es können Verpackungen 44b mit in Transportrichtung 36b unterschiedlicher Länge überführt werden, ohne dass eine Formatumstellung durch einen Bediener notwendig ist. Es ist ebenso möglich, dass eine Länge von in Transportrichtung 36b aufeinanderfolgenden Verpackungen 44b abweicht. Die Mitnahmeelemente 42b, 43b sind an jeweils unabhängigen Transporteinheiten 40b, 41b gelagert, die in einer gemeinsamen Bewegungsebene 34b entlang einer in diesem Beispiel nicht dargestellten Transportstrecke in der Transportrichtung 36b und in einer der Transportrichtung 36b entgegengesetzten Rückholrichtung 38b unabhängig antreibbar gelagert sind. Auf eine um eine Rotationsachse rotierende Koppelbewegung kann in diesem Ausführungsbeispiel aufgrund der in Transportrichtung 36b unabhängig antreibbaren Mitnahmeelemente 42b, 43b verzichtet werden. Um mit den Mitnahmeelementen 42b, 43b eine der Verpackungen 44b formschlüssig zu koppeln, werden die Mitnahmeelemente 42b, 43b zunächst in einem Abstand 50b, der etwas größer, z.B. 1 - 5 mm, ist als die Länge der Verpackung 44b in Transportrichtung 36b, vor und hinter der Verpackung 44b positioniert. Dann werden die Mitnahmeelemente 42b, 43b in der Koppelbewegung 46b in Richtung der Verpackung 44b ausgefahren. Anschließend wird der Abstand 50b zwischen den Mitnahmeelementen 42b, 43b so weit verringert, dass die Mitnahmeelementen 42b, 43b die Verpackung 44b formschlüssig koppeln und klemmen. Dieses Verringern des Abstands 50b durch ein Bewegen der Transporteinheiten 40b, 41b ersetzt das Klemmen durch die rotierende Koppelbewegung 46a des ersten Ausführungsbeispiels.

Die Figuren 8 bis 10 zeigen eine schematische Darstellung eines Ausschnitts einer nicht erfindungsgemäßen Transportvorrichtung 10c für eine Verpackungsmaschine 12c in einem dritten nicht erfindungsgemäßen Ausführungsbeispiel. Die Transportvorrichtung 10c unterscheidet sich von der Transportvorrichtung 10b des vorangegangenen Ausführungsbeispiels insbesondere dadurch, dass an Transporteinheiten 40c' - 40c"" jeweils ein Mitnahmeelement 42c' - 42c"" angeordnet ist. Die Mitnahmeelemente 42c' - 42c"" sind dazu vorgesehen, jeweils eine Verpackung 44c mit einer jeweiligen Transporteinheit 40c' - 40c"" formschlüssig zu koppeln. Auf ein Klemmen von Verpackungen 44c zwischen zwei Mitnahmeelementen wie in den vorangegangenen Ausführungsbeispielen wird verzichtet. Jeweils eines der Mitnahmeelemente 42c' - 42c"" schiebt eine der Verpackungen 44c in Transportrichtung 36c. Die Transportvorrichtung 10c kann somit mit den vier Mitnahmeelementen 42c' - 42c"" vier der Verpackungen 44c' - 44c""" gleichzeitig überführen. Dagegen kann eine Position der Verpackungen 44c' - 44c""" durch die Mitnahmeelemente 42c' - 42c"" nur entgegen der Transportrichtung 36c sichergestellt werden. Es können Verpackungen 44c' - 44c""" mit in Transportrichtung 36c unterschiedlicher Länge überführt werden, ohne dass eine Formatumstellung durch einen Bediener notwendig ist. Es ist ebenso möglich, dass eine Länge von in Transportrichtung 36c aufeinanderfolgenden Verpackungen 44c' - 44c""" abweicht.

Die vier Transporteinheiten 40c' - 40c"" sind in einer gemeinsamen Bewegungsebene 34c entlang einer Transportstrecke 20c in der Transportrichtung 36c und in einer der Transportrichtung 36c entgegengesetzten Rückholrichtung 38c unabhängig antreibbar gelagert. Die Transporteinheiten 40c', 40c" sind an einer Linearführung 56c' und die Transporteinheiten 40c'", 40c"" sind an einer Linearführung 56c" entlang der gemeinsamen Bewegungsebene 34c gelagert. Die Transporteinheiten 40c' - 40c"" bilden mit den Linearführungen 56c' und 56c" ein Linearmotorsystem 74c. In den Transporteinheiten 40c' - 40c"" ist jeweils ein als Permanentmagnet ausgebildetes Sekundärteil 72c des Linearmotorsystems 74c integriert. Die Linearführungen 56c' und 56c" weisen von Wicklungen und einem Wegmesssystem gebildete Primärteile 70c des Linearmotorsystems 74c auf. Eine Steuereinheit 60c steuert das Linearmotorsystem 74c geeignet an, so dass sich die Transporteinheiten 40c' - 40c"" entlang der Transportstrecke 20c frei positionieren lassen. Alternativ zum Linearmotorsystem 74c könnten die Transporteinheiten 40c' - 40c"" wie im ersten Ausführungsbeispiel durch umlaufende Zahnriemen angetrieben werden. An den Transporteinheiten 40c' - 40c"" ist jeweils eines der Mitnahmeelemente 42c' - 42c"" an einem von jeweils einem Hubmagnet gebildeten Antriebsmittel 48c' - 48c"" gelagert. Die Mitnahmeelemente 42c' - 42c"" können durch die Antriebsmittel 48c' - 48c"" in einer zur Bewegungsebene 34c senkrechten Koppelbewegung 46c angetrieben werden.

Durch die Lagerung der Transporteinheiten 40c' - 40c"" auf den zwei Linearführungen 56c' und 56c" können die jeweils eine Verpackung 44c überführenden Transporteinheiten 40c' - 40c"" besonders flexibel entlang der Transportstrecke 20c angetrieben werden. Insbesondere kann zwischen den Transporteinheiten 40c' - 40c" und den Transporteinheiten 40c'" - 40c"" keine Kollision stattfinden. Es ist insbesondere möglich, die Transporteinheiten 40c' - 40c" oder die Transporteinheiten 40c'" - 40c"" in der Rückholrichtung 38c anzutreiben, um zu einem Transportstreckenabschnitt 24c zurückzukehren, während die Transporteinheiten 40c'" - 40c"" oder die Transporteinheiten 40c' - 40c" in der Transportrichtung 36c angetrieben werden, um Verpackungen 44c in Richtung eines Transportstreckenabschnitts 28c zu transportieren.

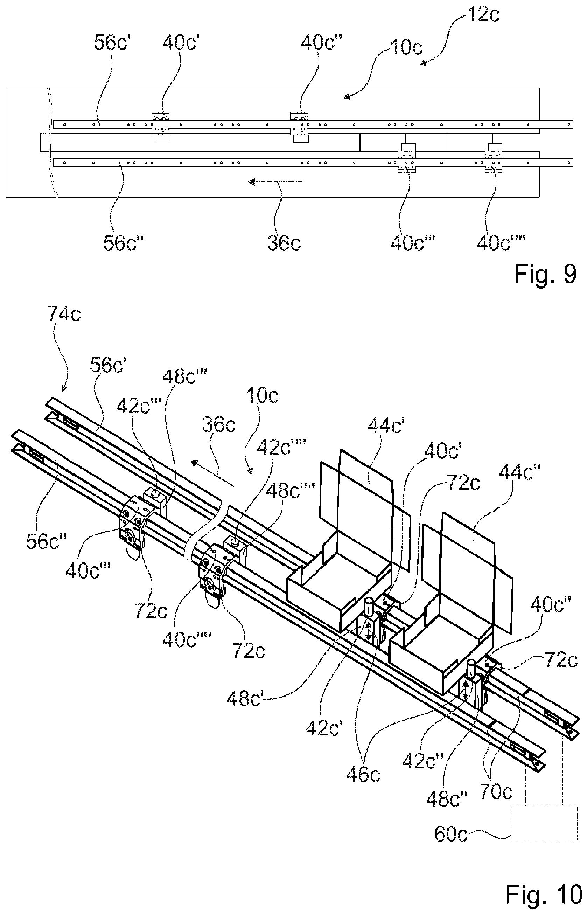

Figur 10 zeigt in einer vereinfachten Prinzipdarstellung die Schritte eines nicht erfindungsgemäßen Verfahrens zum Überführen von Verpackungsgruppen 14c mit der Transportvorrichtung 10c im dritten nicht erfindungsgemäßen Ausführungsbeispiel. In der Folge werden die einzelnen Verfahrensschritte beschrieben:
In einem ersten Schritt werden die Transporteinheiten 40c' und 40c" in dem ersten Transportstreckenabschnitt 24c, in dem sechs Verpackungen 44c' - 44c""" in einer ersten Verpackungsgruppenanordnung 22c mit einer ersten Teilung 30c angeordnet sind, in der Bewegungsebene 34c in Transportrichtung 36c an das entgegen der Transportrichtung 36c orientierte Ende der entgegen der Transportrichtung 36c ersten Verpackung 44c' beziehungsweise zweiten Verpackung 44c" bewegt und die Mitnahmeelemente 42c', 42c" werden mit den Verpackungen 44c', 44c" gekoppelt (Figur 10-I). In einem weiteren Schritt überführen die Transporteinheiten 40c', 40c" die Verpackungen 44c', 44c" in der Transportrichtung 36c in Richtung des weiteren Transportstreckenabschnitts 28c, während die Transporteinheit 40c'" und 40c"" in der Bewegungsebene 34c in Transportrichtung 36c an entgegen der Transportrichtung 36c orientierte Enden der entgegen der Transportrichtung 36c nächsten beziehungsweise übernächsten Verpackungen 44c'", 44c"" bewegt und die Mitnahmeelemente 42c'", 42c"" mit den Verpackungen 44c'", 44c"" gekoppelt werden (Figur 10-II). In einem weiteren Schritt überführen die Transporteinheiten 40c'", 40c"" die Verpackungen 44c'", 44c"" in der Transportrichtung 36c in Richtung des weiteren Transportstreckenabschnitts 28c. Die Transporteinheiten 40c' und 40c" mit den Verpackungen 44c', 44c" erreichen Sollpositionen im Transportstreckenabschnitt 28c, in dem die Verpackungen 44c' - 44c""" in einer weiteren Teilung 32c einer weiteren Verpackungsgruppenanordnung 26c angeordnet werden sollen. Die Mitnahmeelemente 42c', 42c" werden von den Verpackungen 44c' und 44c" entkoppelt (Figur 10-III). In einem weiteren Schritt werden die Transporteinheiten 40c' und 40c" in der Rückholrichtung 38c in den ersten Transportstreckenabschnitt 24c überführt, während sich die Transporteinheiten 40c'" und 40c"" mit den Verpackungen 44c'" und 44c"" noch in der Transportrichtung 36c bewegen. Dies ist ohne Kollision möglich, da die Transporteinheiten 40c' und 40c" an der Linearführung 56c' und die Transporteinheiten 40c'" und 40c"" an der Linearführung 56c" gelagert sind. Die Verpackungen 44c', 44c" werden durch eine hier nicht näher dargestellte Weitertransporteinheit vom Transportstreckenabschnitt 28c entfernt (Figur 10-IV). In einem weiteren Schritt erreichen die Transporteinheiten 40c'" und 40c"" mit den Verpackungen 44c'", 44c"" die Sollpositionen im Transportstreckenabschnitt 28c, in dem die Verpackungen 44c' - 44c""" in der weiteren Teilung 32c der weiteren Verpackungsgruppenanordnung 26c angeordnet werden sollen. Die Mitnahmeelemente 42c'", 42c"" werden von den Verpackungen 44c'" und 44c"" entkoppelt. Gleichzeitig werden die Mitnahmeelemente 42c', 42c" mit den Verpackungen 44c'"" und 44c""" gekoppelt, im Anschluss überführen die Transporteinheiten 40c' und 40c" die Verpackungen 44c'"" und 44c""" auf die gleiche Art in die Verpackungsgruppenanordnung 26c in dem Transportstreckenabschnitt 28c (Figur 6-V).

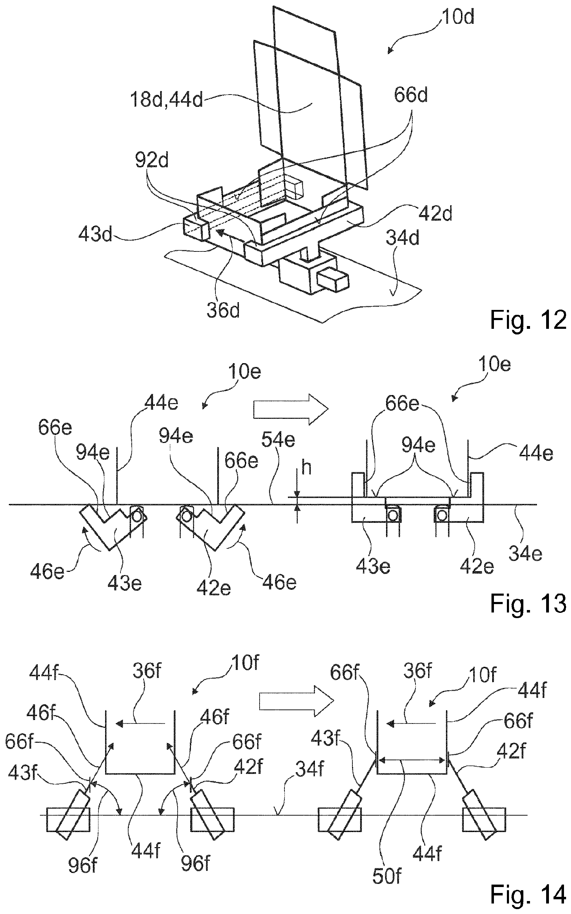

Figur 12 zeigt eine schematische Darstellung eines Ausschnitts einer nicht erfindungsgemäßen Transportvorrichtung 10d in einem vierten nicht erfindungsgemäßen Ausführungsbeispiel. Die Transportvorrichtung 10d unterscheidet sich von der Transportvorrichtung 10b des zweiten Ausführungsbeispiels insbesondere dadurch, dass Mitnahmeelemente 42d, 43d eine Verpackung 44d umgreifen. Die Mitnahmeelemente 42d, 43d können insbesondere aus einem Kartonzuschnitt 18d gefaltete Verpackungen 44d, welche noch nicht verleimt sind, halten, so dass vermieden wird, dass sich die Verpackung 44d auffaltet. Die Mitnahmeelemente 42d, 43d weisen zu diesem Zweck neben senkrecht zu einer Transportrichtung 36d orientierten Haltefingern mit Halteflächen 66d in einem Abstand, der einer senkrecht zur Transportrichtung 36d und parallel zu einer Bewegungsebene 34d gemessenen Breite einer Verpackung 44d entspricht, zwei Haltekanten 92d auf; die die Verpackung 44d umgreifen.

Figur 13 zeigt eine schematische Darstellung eines Ausschnitts einer erfindungsgemäßen Transportvorrichtung 10e in einem fünften Ausführungsbeispiel. Die Transportvorrichtung 10e unterscheidet sich von der Transportvorrichtung 10a des ersten Ausführungsbeispiels insbesondere dadurch, dass Mitnahmeelemente 42e, 43e eine Verpackung 44e beim Klemmen mit einer Koppelbewegung 46e um eine Höhe h über eine Produktauflage 54e anheben. Die Mitnahmeelemente 42e, 43e weisen zu diesem Zweck neben Halteflächen 66e Auflageflächen 94e auf; die in einem gekoppelten Betriebszustand parallel zu einer Bewegungsebene 34e angeordnet sind und von der Bewegungsebene 34e einen um einen geringen Betrag, zum Beispiel 1 - 3mm, größeren Abstand aufweisen als die Produktauflage 54e. Die Mitnahmeelemente 42e, 43e tragen die Verpackung 44e während des Überführens und eine Reibung der Verpackung 44e mit der Produktauflage 54e wird vermieden. Die Mitnahmeelemente 42e, 43e dieses Ausführungsbeispiels eignen sich besonders für Verpackungen 44e mit einer klebrigen Oberfläche oder Verpackungen 44e, die durch Schieben über die Produktauflage 54e leicht beschädigt werden könnten.

Figur 14 zeigt eine schematische Darstellung eines Ausschnitts einer erfindungsgemäßen Transportvorrichtung 10f in einem sechsten Ausführungsbeispiel. Die Transportvorrichtung 10f unterscheidet sich von der Transportvorrichtung 10a des ersten Ausführungsbeispiels insbesondere dadurch, dass Mitnahmeelemente 42f; 43f in einer gegenüber einer Bewegungsebene 34f um einen Winkel 96f geneigten Koppelbewegung 46f antreibbar gelagert sind. Die Mitnahmeelemente 42f; 43f sind bezogen auf eine zur einer Transportrichtung 36f senkrechte Mittelebene symmetrisch angeordnet und die Koppelbewegungen 46f sind symmetrisch auf die Mittelebene zu geneigt. Die Koppelbewegung 46f bewirkt somit eine Verringerung eines Abstands 50f zwischen Halteflächen 66f der Mitnahmeelemente 42f; 43f; so dass die Koppelbewegung 46f ebenso wie die rotierende Koppelbewegung 46a des ersten Ausführungsbeispiels dazu geeignet ist, eine Verpackung 44f zu klemmen.

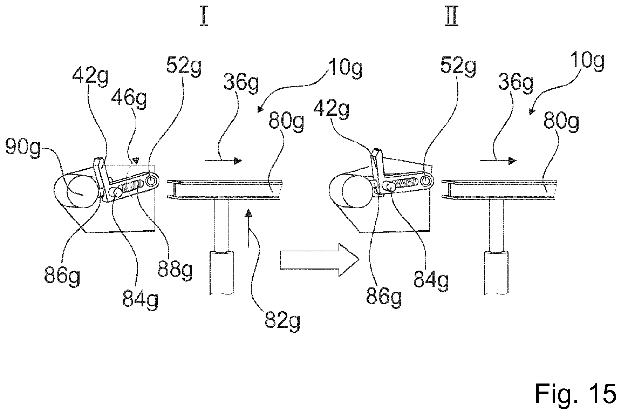

Figur 15 zeigt eine Darstellung eines Mitnahmeelements 42g einer Transportvorrichtung 10g in einem siebten Ausführungsbeispiel mit einem Anlenkelement 80g zum Antrieb einer Koppelbewegung 46g. Das Anlenkelement 80g ist als senkrecht zu einer Transportrichtung 36g in einer Anlenkbewegung 82g verschiebbare Schiene ausgebildet. Das Mitnahmeelement 42g weist in einem Radius zu einer Rotationsachse 52g ein Übertragungselement 84g auf; welches in eine schienenförmige Ausnehmung des Anlenkelelements 80g eingreift und von dieser in Richtung der Anlenkbewegung 82g geführt wird. Wird das Anlenkelement 80g in der Anlenkbewegung 82g bewegt, schwenkt das Mitnahmeelement 42g in der Koppelbewegung 46g in einen gekoppelten Zustand (Figur 15-II). Wird das Anlenkelement 80g entgegen der Anlenkbewegung 82g bewegt, schwenkt das Mitnahmeelement 42g entgegen der Koppelbewegung 46g in einen entkoppelten Zustand (Figur 15-I). Das Mitnahmeelement 42g weist zudem eine Rastnase 86g auf; welche durch eine Rastfeder 88g in Richtung einer Rast 90g gefedert ist. Die Rastnase 86g bewirkt, dass das Mitnahmeelement 42g in der entkoppelten sowie in der gekoppelten Stellung einrastet und diesen Zustand ohne Einwirkung des Anlenkelements 80g beibehält. Das Mitnahmeelement 42g mit dem Anlenkelement 80g kann in den weiteren Ausführungsbeispielen anstelle eines aktiven Antriebsmittels, welches an den Transporteinheiten angeordnet ist, eingesetzt werden. Auf eine Energiezuführung, wie zum Beispiel eine Stromzuführung, auf die Transporteinheiten kann in diesem Fall verzichtet werden.

## Patentansprüche

1. Transportvorrichtung für eine Verpackungsmaschine (12a), zum Überführen von Verpackungsgruppen (14a), insbesondere Gruppen von Kartonschachteln (16a) und/oder Kartonzuschnitten (18a), entlang einer Transportstrecke (20a) aus zumindest einer ersten Verpackungsgruppenanordnung (22a) in einem ersten Transportstreckenabschnitt (24a) in zumindest eine weitere Verpackungsgruppenanordnung (26a) in zumindest einem weiteren Transportstreckenabschnitt (28a), wobei die erste Verpackungsgruppenanordnung (22a) und die zumindest eine weitere Verpackungsgruppenanordnung (26a) jeweils eine abweichende Teilung (30a; 32a) aufweisen, mit zumindest zwei in einer Bewegungsebene (34a; 34e; 34f) entlang der Transportstrecke (20a) zumindest zwischen dem ersten Transportstreckenabschnitt (24a) und dem weiteren Transportstreckenabschnitt (28a) in einer Transportrichtung (36a; 36f-g) und in einer der Transportrichtung (36a; 36f-g) entgegengesetzten Rückholrichtung (38a) unabhängig antreibbaren Transporteinheiten (40a, 40a', 40a"), wobei die Transporteinheiten (40a, 40a', 40a") jeweils zumindest ein Mitnahmeelement (42a, 42a', 42a", 43a, 43a', 43a"; 42e, 43e; 42f; 43f; 42g) aufweisen, das dazu vorgesehen ist, in zumindest einem Betriebszustand die jeweilige Transporteinheit (40a, 40a', 40a") mit einer Verpackung (44a, 44a' - 44a"", 44e-f) der zu überführenden Verpackungsgruppe (14a) zumindest während des Überführens vom ersten Transportstreckenabschnitt (24a) in den zumindest einen weiteren Transportstreckenabschnitt (28a) zu koppeln, wobei die Mitnahmeelemente (42a, 42a', 42a", 43a, 43a', 43a"; 42e, 43e; 42f; 43f; 42g) an den Transporteinheiten (40a, 40a', 40a") jeweils unabhängig von dem zumindest einen Mitnahmeelement (42a, 42a', 42a", 43a, 43a', 43a"; 42e, 43e; 42f; 43f; 42g) der zumindest einen weiteren Transporteinheit (40a, 40a', 40a") in einer Koppelbewegung (46a; 46e-g) mit der mit der jeweiligen Transporteinheit (40a, 40a', 40a") zu koppelnden Verpackung (44a, 44a' - 44a"", 44e-f) kraft- und/oder formschlüssig koppel- und entkoppelbar gelagert sind, wobei die Mitnahmeelemente (42a, 42a', 42a", 43a, 43a', 43a"; 42e, 43e; 42f; 43f; 42g) unabhängig von ihrer Position entlang der Transportstrecke (20a) in der Koppelbewegung (46a; 46e-g) antreibbar sind und wobei die Transporteinheiten (40a, 40a', 40a") jeweils zumindest ein aktives Antriebsmittel (48a', 48a") aufweisen, das dazu vorgesehen ist, das jeweils zumindest eine Mitnahmeelement (42a, 42a', 42a", 43a, 43a', 43a") der jeweiligen Transporteinheit (40a, 40a', 40a") mit der Koppelbewegung (46a) anzutreiben, **dadurch gekennzeichnet, dass** die Mitnahmeelemente (42a, 42a', 42a", 43a, 43a', 43a"; 42e, 43e; 42g) an den Transporteinheiten (40a, 40a', 40a") um eine zur Transportrichtung (36a; 36g) senkrechte, zur Bewegungsebene (34a; 34e) parallele Rotationsachse (52a; 52g) in der Koppelbewegung (46a; 46e; 46g) drehbar gelagert sind **oder dass** die Mitnahmeelemente (42f, 43f) in einer gegenüber der Bewegungsebene (34f) um einen Winkel (96f) geneigten Koppelbewegung (46f) antreibbar gelagert sind.

2. Transportvorrichtung nach Anspruch 1, **dadurch gekennzeichnet, dass** jeweils zwei Mitnahmeelemente (42a, 42a', 42a", 43a, 43a', 43a"; 42e, 43e; 42f; 43f) mit einer der zu koppelnden Verpackungen (44a, 44a' - 44a""; 44e-f) an in Transportrichtung (36a; 36f-g) entgegengesetzten Enden der Verpackung (44a, 44a' - 44a""; 44e-f) form-schlüssig koppelbar sind.

3. Transportvorrichtung nach Anspruch 2, **dadurch gekennzeichnet, dass** die jeweils zwei mit einer Verpackung formschlüssig koppelbaren Mitnahmeelemente in Transportrichtung unabhängig antreibbar sind.

4. Transportvorrichtung zumindest nach Anspruch 2, **dadurch gekennzeichnet, dass** die jeweils zwei mit einer Verpackung (44a, 44a' - 44a"") formschlüssig koppelbaren Mitnahmeelemente (42a, 42a', 42a", 43a, 43a', 43a") an einer gemeinsamen Transporteinheit (40a, 40a', 40a") in einem in Transportrichtung (36a) einstellbaren Abstand (50a) gelagert sind.

5. Verpackungsmaschine (12a) mit einer Transportvorrichtung (10a; 10e-g) nach einem der vorhergehenden Ansprüche.

6. Verfahren zum Überführen von Verpackungsgruppen (14a), insbesondere Gruppen von Kartonschachteln (16a) und/oder Kartonzuschnitten (18a), entlang einer Transportstrecke aus zumindest einer ersten Verpackungsgruppenanordnung (22a) in einem ersten Transportstreckenabschnitt (24a) in zumindest eine weitere Verpackungsgruppenanordnung (26a) in zumindest einem weiteren Transportstreckenabschnitt (28a), wobei die erste Verpackungsgruppenanordnung (22a) und die zumindest eine weitere Verpackungsgruppenanordnung (28a) eine abweichende Teilung (30a; 32a) aufweisen, bei dem zumindest zwei Transporteinheiten (40a, 40a', 40a") in einer gemeinsamen Bewegungsebene (34a; 34e; 34f) entlang der Transportstrecke (20a) zumindest zwischen dem ersten Transportstreckenabschnitt (24a) und dem weiteren Transportstreckenabschnitt (28a) in einer Transportrichtung (36a) und in einer der Transportrichtung (36a) entgegengesetzten Rückholrichtung (38a) unabhängig angetrieben werden, und wobei die Transporteinheiten (40a, 40a', 40a") jeweils zumindest ein Mitnahmeelement (42a, 42a', 42a", 43a, 43a', 43a";42c' - 42c"") aufweisen, das dazu vorgesehen ist, eine Verpackung (44a, 44a' - 44a"") der zu überführenden Verpackungsgruppe (14a) zumindest während des Überführens vom ersten Transportstreckenabschnitt (24a) in den zumindest einen weiteren Transportstreckenabschnitt (28a) individuell anzutreiben, und bei dem die Mitnahmeelemente (42a, 42a', 42a", 43a, 43a', 43a") der Transporteinheiten (40a, 40a', 40a") jeweils voneinander unabhängig mit der mit der Transporteinheiten (40a, 40a', 40a") zu koppelnden Verpackung (44a, 44a' - 44a"") in einer Koppelbewegung (46a) kraft- und/oder formschlüssig gekoppelt und/oder entkoppelt werden, wobei die Mitnahmeelemente (42a, 42a', 42a", 43a, 43a', 43a"; 42e, 43e; 42f; 43f; 42g) unabhängig von ihrer Position entlang der Transportstrecke (20a) in der Koppelbewegung (46a; 46e-g) angetrieben werden und wobei die Transporteinheiten (40a, 40a', 40a") jeweils zumindest ein aktives Antriebsmittel (48a', 48a") aufweisen, das das jeweils zumindest eine Mitnahmeelement (42a, 42a', 42a", 43a, 43a', 43a") der jeweiligen Transporteinheit (40a, 40a', 40a") mit der Koppelbewegung (46a) antreibt, **dadurch gekennzeichnet, dass** die Mitnahmeelemente (42a, 42a', 42a", 43a, 43a', 43a"; 42e, 43e; 42g) an den Transporteinheiten (40a, 40a', 40a") um eine zur Transportrichtung (36a; 36g) senkrechte, zur Bewegungsebene (34a; 34e) parallele Rotationsachse (52a; 52g) in der Koppelbewegung (46a; 46e; 46g) gedreht werden oder dass die Mitnahmeelemente (42f, 43f) in einer gegenüber der Bewegungsebene (34f) um einen Winkel (96f) geneigten Koppelbewegung (46f) angetrieben werden.

7. Verfahren nach Anspruch 6, **dadurch gekennzeichnet, dass** in einem Verfahrensschritt in dem ersten Transportstreckenabschnitt (24a) mit der Verpackungsgruppe (14a) in der ersten Verpackungsgruppenanordnung (22a) zumindest ein erstes Mitnahmeelement (42a', 43a') mit einer entgegen der Transportrichtung (36a) ersten Verpackung (44a', 44a"') der Verpackungsgruppe (14a) gekoppelt wird und diese Verpackung (44a', 44a"') in Transportrichtung (36a) in Richtung des weiteren Transportstreckenabschnitts (28a) angetrieben wird und in einem weiteren Verfahrensschritt zumindest ein zweites Mitnahmeelement (42a", 43a") mit einer entgegen der Transportrichtung (36a) zweiten Verpackung (44a", 44a"") der Verpackungsgruppe (14a) gekoppelt wird und diese zweite Verpackung (44a", 44a"") in Transportrichtung (36a) in Richtung des weiteren Transportstreckenabschnitts (28a) angetrieben wird.

8. Verfahren nach Anspruch 7, **dadurch gekennzeichnet, dass** in einem weiteren Verfahrensschritt das zumindest eine erste Mitnahmeelement (42a', 43a') von der entgegen der Transportrichtung (36a) ersten Verpackung (44a', 44a"') und das zumindest eine zweite Mitnahmeelement (42a", 43a") von der entgegen der Transportrichtung (36a) zweiten Verpackung (44a", 44a"") bei Erreichen der weiteren Verpackungsgruppenanordnung (26a) im weiteren Transportstreckenabschnitt (28a) entkoppelt wird.

9. Verfahren nach Anspruch 8, **dadurch gekennzeichnet, dass** in einem weiteren Verfahrensschritt die entkoppelten Mitnahmeelemente (42a', 43a', 42a", 43a") in einer Rückholrichtung (38a) vom weiteren Transportstreckenabschnitt (28a) in den ersten Transportstreckenabschnitt (24a) überführt werden.

## Claims

1. Transporting apparatus for a packaging machine (12a), for transferring packaging groups (14a), in particular groups of cardboard boxes (16a) and/or cardboard blanks (18a), along a conveying section (20a) from at least one first packaging group arrangement (22a) in a first conveying section portion (24a) into at least one packaging group arrangement (26a) in at least one further conveying section portion (28a), wherein the first packaging group arrangement (22a) and the at least one further packaging group arrangement (26a) comprise in each case a deviating separation (30a, 32a), with at least two conveying units (40a, 40a', 40a") which are independently drivable in a conveying direction (36a; 36f-g) and in a return direction (38a), which is opposite to the conveying direction (36a; 36f-g), in a movement plane (34a; 34e; 34f) along the conveying section (20a) at least between the first conveying section portion (24a) and the further conveying section portion (28a), wherein the conveying units (40a, 40a', 40a") comprise in each case at least one entrainment element (42a, 42a', 42a", 43a, 43a', 43a"; 42e, 43e; 42f, 43f; 42g) which is provided for the purpose of coupling, in at least one operating state, the respective conveying unit (40a, 40a', 40a") with a packaging (44a, 44a'-44a""; 44e-f) of the packaging group (14a) to be transferred at least during the transfer procedure from the first conveying section portion (24a) into the at least one further conveying section portion (28a),
wherein the entrainment elements (42a, 42a', 42a", 43a, 43a', 43a"; 42e, 43e; 42f, 43f; 42g) on the conveying units (40a, 40a', 40a") are mounted so as to be couplable and uncouplable in a non-positive and/or positive locking manner in each case independently with or from the at least one entrainment element (42a, 42a', 42a", 43a, 43a', 43a"; 42e, 43e; 42f, 43f; 42g) of the at least one further conveying unit (40a, 40a', 40a") in a coupling movement (46a; 46e-g) with the packaging (44a, 44a', 44a"; 44e-f) to be coupled with the respective conveying unit (40a, 40a', 40a"), wherein the entrainment elements (42a, 42a', 42a", 43a, 43a', 43a"; 42e, 43e; 42f, 43f; 42g) are drivable in the coupling movement (46a; 46e-g) irrespective of their position along the conveying section (20a) and wherein the conveying units (40a, 40a', 40a") comprise in each case at least one active driving means (48a', 48a") which is provided for the purpose of driving the respectively at least one entrainment element (42a, 42a', 42a", 43a, 43a', 43a") of the respective conveying unit (40a, 40a', 40a") with the coupling movement (46a),
**characterized in that** the entrainment elements (42a, 42a', 42a", 43a, 43a', 43a"; 42e, 43e; 42g) are mounted on the conveying units (40a, 40a', 40a") so as to be rotatable in the coupling movement (46a; 46e; 46g) about a rotational axis (52a; 52g) which is perpendicular to the conveying direction (36a; 36g) and parallel to the movement plane (34a; 34e) **or that** the entrainment elements (42f, 43f) are mounted such that they are drivable in a coupling movement (46f) that is inclined by an angle (96f) relative to the movement plane (34f).

2. Transporting apparatus according to claim 1,
**characterized in that** in each case two entrainment elements (42a, 42a', 42a", 43a, 43a', 43a"; 42e, 43e; 42f, 43f) are couplable in a positive locking manner with one of the packagings (44a, 44a'-44a""; 44e-f) in the conveying direction (36a; 36f-g).

3. Transporting apparatus according to claim 2,
**characterized in that** the in each case two entrainment elements which are couplable in a positive locking manner with a packaging are independently drivable in the conveying direction.

4. Transporting apparatus according to at least claim 2,
**characterized in that** the in each case two entrainment elements (42a, 42a', 42a", 43a, 43a', 43a") which are couplable in a positive locking manner with a packaging (44a, 44a'-44a"") are mounted on a common conveying unit (40a, 40a', 40a") at a spacing (50a) which is adjustable in the conveying direction (36a).

5. Packaging machine (12a) having a transporting apparatus (10a; 10e-g) according to one of the preceding claims.

6. Method for transferring packaging groups (14a), in particular groups of cardboard boxes (16a) and/or cardboard blanks (18a), along a conveying section from at least one first packaging group arrangement (22a) in a first conveying section portion (24a) into at least one further packaging group arrangement (26a) in at least one further conveying section portion (28a), wherein the first packaging group arrangement (22a) and the at least one further packaging group arrangement (28a) comprise a deviating separation (30a, 32a), where at least two conveying units (40a, 40a', 40a") are independently drivable in a conveying direction (36a) and in a return direction (38a), which is opposite to the conveying direction (36a), in a common movement plane (34a) along the conveying section (20a) at least between the first conveying section portion (24a) and the further conveying section portion (28a) and wherein the conveying units (40a, 40a', 40a") comprise in each case at least one entrainment element (42a, 42a', 42a", 43a, 43a', 43a") which is provided for the purpose of individually driving a packaging (44a, 44a'-44a"") of the packaging group (14a) to be transferred at least during the transfer procedure from the first conveying section portion (24a) into the at least one further conveying section portion (28a), and where the entrainment elements (42a, 42a', 42a", 43a, 43a', 43a") of the conveying units (40a, 40a', 40a") are coupled and/or uncoupled in a non-positive and/or positive locking manner in a coupling movement (46a) in each case independently from one another with or from the packaging (44a, 44a'-44a"") to be coupled with the conveying units (40a, 40a', 40a"), wherein the entrainment elements (42a, 42a', 42a", 43a, 43a', 43a"; 42e, 43e; 42f, 43f; 42g) are driven in the coupling movement (46a; 46e-g) irrespective of their position along the conveying section (20a) and wherein the conveying units (40a, 40a', 40a") comprise in each case at least one active driving means (48a', 48a") which drives the respectively at least one entrainment elements (42a, 42a', 42a", 43a, 43a', 43a") of the respective conveying unit (40a, 40a', 40a") with the coupling movement (46a),
**characterized in that** the entrainment elements (42a, 42a', 42a", 43a, 43a', 43a"; 42e, 43e; 42g) are rotated on the conveying units (40a, 40a', 40a") in the coupling movement (46a; 46e; 46g) about a rotational axis (52a; 52g) which is perpendicular to the conveying direction (36a; 36g) and parallel to the movement plane (34a; 34e) **or that** the entrainment elements (42f, 43f) are driven in a coupling movement (46f) that is inclined by an angle (96f) relative to the movement plane (34f).

7. Method according to claim 6,
**characterized in that** in one method step in the first conveying section portion (24a) with the packaging group (14a) in the first packaging group arrangement (22a), at least one first entrainment element (42a', 43a') is coupled with a first packaging (44a', 44a"') of the packaging group (14a) opposing the conveying direction (36a) and said packaging (44a', 44a"') is driven in the conveying direction (36a) in the direction of the further conveying section portion (28a) and in a further method step at least one second entrainment element (42a", 43a") is coupled with a second packaging (44a", 44a"") of the packaging group (14a) opposing the conveying direction (36a) and said second packaging (44a", 44a"") is driven in the conveying direction (36a) in the direction of the further conveying section portion (28a).

8. Method according to claim 7,
**characterized in that** in a further method step, the at least one first entrainment element (42a', 43a') is uncoupled from the first packaging (44a', 44a"') opposing the conveying direction (36a) and the at least one second entrainment element (42a", 43a") is uncoupled from the second packaging (44a", 44a"") opposing the conveying direction (36a) when the further packaging group arrangement (26a) in the further conveying section portion (28a) is reached.

9. Method according to claim 8,
**characterized in that** in a further method step, the uncoupled entrainment elements (42a', 43a', 42a", 43a") are transferred in a return direction (38a) from the further conveying section portion (28a) into the first conveying section portion (24a).

## Revendications

1. Dispositif de transport pour une machine d'emballage (12a), pour le transfert de groupes d'emballages (14a), en particulier de groupes de boîtes en carton (16a) et/ou de pièces découpées en carton (18a), le long d'une section de transport (20a) à partir d'au moins un premier agencement de groupes d'emballages (22a) dans une première portion de section de transport (24a) dans au moins un agencement de groupes d'emballages supplémentaire (26a) dans au moins une portion de section de transport supplémentaire (28a), le premier agencement de groupes d'emballages (22a) et l'au moins un agencement de groupes d'emballages supplémentaire (28a) présentant chacun une division divergente (30a, 32a) avec au moins deux unités de transport (40a, 40a', 40a") pouvant être entrainées indépendamment dans un plan de déplacement (34a ; 34e ; 34f) le long de la section de transport (20a) au moins entre la première portion de section de transport (24a) et la portion de section de transport supplémentaire (28a) dans une direction de transport (36a ; 36f-g) et dans une direction de retour (38a) opposée à la direction de transport (36a ; 36f-g), les unités de transport (40a, 40a', 40a") présentant chacune au moins un élément d'entraînement (42a, 42a', 42a", 43a, 43a', 43a" ; 42e, 43e ; 42f ; 43f ; 42g), qui est prévu pour accoupler, au moins dans un état de fonctionnement, l'unité de transport respective (40a, 40a', 40a") à un emballage (44a, 44a'-44a"" ; 44e-f) du groupe d'emballages à transférer (14a) au moins pendant le transfert de la première portion de section de transport (24a) à l'au moins une portion de section de transport supplémentaire (28a), où les éléments d'entraînement (42a, 42a', 42a", 43a, 43a', 43a" ; 42e, 43e ; 42f ; 43f ; 42g) sont supportés de manière à pouvoir être accouplés et désaccouplés par engagement par force et/ou par correspondance de formes au niveau des unités de transport (40a, 40a', 40a") à chaque fois indépendamment de l'au moins un élément d'entraînement (42a, 42a', 42a", 43a, 43a', 43a" ; 42e, 43e ; 42f ; 43f ; 42g) de l'au moins une unité de transport supplémentaire (40a, 40a', 40a") dans un mouvement d'accouplement (46a ; 46e-g) à l'emballage (44a, 44a' - 44a"", 44e-f) devant être accouplé à l'unité de transport respective (40a, 40a', 40a"), les éléments d'entraînement (42a, 42a', 42a", 43a, 43a', 43a" ; 42e, 43e ; 42f ; 43f ; 42g) pouvant être entraînés indépendamment de leur position le long de la section de transport (20a) dans le mouvement d'accouplement (46a ; 46e-g) et les unités de transport (40a, 40a', 40a") présentant à chaque fois au moins un moyen d'entraînement actif (48a', 48a") qui est prévu pour entraîner l'au moins un élément d'entraînement respectif (42a, 42a', 42a", 43a, 43a', 43a") de l'unité de transport respective (40a, 40a', 40a") avec le mouvement d'accouplement (46a),
**caractérisé en ce que** les éléments d'entraînement (42a, 42a', 42a", 43a, 43a', 43a" ; 42e, 43e ; 42g) sont supportés dans le mouvement d'accouplement (46a ; 46e ; 46g) au niveau des unités de transport (40a, 40a', 40a") de manière à pouvoir tourner autour d'un axe de rotation (52a ; 52g) perpendiculaire à la direction de transport (36a ; 36g), parallèle au plan de déplacement (34a ; 34e) **ou que** les éléments d'entraînement (42f, 43f) sont supportés de manière à être entraînables dans un mouvement d'accouplement (46f) incliné par un angle (96f) relativement au plan de déplacement (34f).

2. Dispositif de transport selon la revendication 1,
**caractérisé en ce que** deux éléments d'entraînement (42a, 42a', 42a", 43a, 43a', 43a" ; 42e, 43e ; 42f ; 43f) peuvent à chaque fois être accouplés par engagement par correspondance de formes à l'un des emballages (44a, 44a', 44a" ; 44e-f) à accoupler au niveau d'extrémités de l'emballage (44a, 44a'-44a"" ; 44e-f) opposées dans la direction de transport (36a ; 36f-g).

3. Dispositif de transport selon la revendication 2,
**caractérisé en ce que** les deux éléments d'entraînement pouvant à chaque fois être accouplés par engagement par correspondance de formes à un emballage peuvent être entrainés indépendamment dans la direction de transport.

4. Dispositif de transport selon au moins la revendication 2,
**caractérisé en ce que** les deux éléments d'entraînement (42a, 42a', 42a", 43a, 43a', 43a") pouvant à chaque fois être accouplés par engagement par correspondance de formes à un emballage (44a, 44a'-44a"") sont supportés au niveau d'une unité de transport commune (40a, 40a', 40a") à une distance (50a) ajustable dans la direction de transport (36a).

5. Machine d'emballage (12a) comprenant un dispositif de transport (10a ; 10e-g) selon l'une quelconque des revendications précédentes.

6. Procédé de transfert de groupes d'emballages (14a), en particulier de groupes de boîtes en carton (16a) et/ou de pièces découpées en carton (18a), le long d'une section de transport à partir d'au moins un premier agencement de groupes d'emballages (22a) dans une première portion de section de transport (24a) à au moins un agencement de groupes d'emballages supplémentaire (26a) dans au moins une portion de section de transport supplémentaire (28a), le premier agencement de groupes d'emballages (22a) et l'au moins un deuxième agencement de groupes d'emballages (26a) présentant une division divergente (30a, 32a), au moins deux unités de transport (40a, 40a', 40a") étant entraînées indépendamment dans un plan de déplacement commun (34a ; 34e ; 34f) le long de la section de transport (20a) au moins entre la première portion de section de transport (24a) et la portion de section de transport supplémentaire (28a) dans une direction de transport (36a) et dans une direction de retour (38a) opposée à la direction de transport (36a), et les unités de transport (40a, 40a', 40a") présentant à chaque fois au moins un élément d'entraînement (42a, 42a', 42a", 43a, 43a', 43a") qui est prévu pour entraîner individuellement un emballage (44a, 44a'-44a"") du groupe d'emballages (14a) à transférer au moins pendant le transfert de la première portion de section de transport (24a) à l'au moins une portion de section de transport supplémentaire (28a), et les éléments d'entraînement (42a, 42a', 42a", 43a, 43a', 43a") des unités de transport (40a, 40a', 40a") étant accouplés et/ou désaccouplés par engagement par force et/ou par correspondance par formes dans un mouvement d'accouplement (46a) à chaque fois indépendamment les uns des autres à l'emballage (44a, 44a'-44a"") devant être accouplés aux unités de transport (40a, 40a', 40a"), les éléments d'entraînement (42a, 42a', 42a", 43a, 43a', 43a" ; 42e, 43e ; 42f ; 43f ; 42g) indépendamment de leur position le long de la section de transport (20a) étant entraînés dans le mouvement d'accouplement (46a ; 46e-g) et les unités de transport (40a, 40a', 40a") présentant à chaque fois au moins un moyen d'entraînement actif (48a', 48a"), qui entraîne l'au moins un élément d'entraînement (42a, 42a', 42a", 43a, 43a', 43a") respectif de l'unité de transport respective (40a, 40a', 40a") avec le mouvement d'accouplement (46a),
**caractérisé en ce que** les éléments d'entraînement (42a, 42a', 42a", 43a, 43a', 43a" ; 42e, 43e ; 42g) sont tournés dans le mouvement d'accouplement (46a ; 46e ; 46g) au niveau des unités de transport (40a, 40a', 40a") autour d'un axe de rotation (52a ; 52g) perpendiculaire à la direction de transport (36a ; 36g), parallèle au plan de déplacement (34a ; 34e) **ou que** les éléments d'entraînement (42f, 43f) sont entraînés dans le mouvement d'accouplement (46f) incliné par un angle (96f) relativement au plan de déplacement (34f).

7. Procédé selon la revendication 6,
**caractérisé en ce que** dans une étape de procédé, dans la première portion de section de transport (24a) avec le groupe d'emballages (14a) dans le premier agencement de groupes d'emballages (22a), au moins un premier élément d'entraînement (42a', 43a') est accouplé à un premier emballage (44a', 44a''') du groupe d'emballages (14a) opposé à la direction de transport (36a) et cet emballage (44a', 44a''') est entraîné dans la direction de transport (36a) dans la direction de la portion de section de transport supplémentaire (28a) et dans une étape de procédé supplémentaire, au moins un deuxième élément d'entraînement (42a", 43a") est accouplé à un deuxième emballage (44a", 44a"") du groupe d'emballages (14a) opposé à la direction de transport (36a) et ce deuxième emballage (44a", 44a"") est entraîné dans la direction de transport (36a) dans la direction de la portion de section de transport supplémentaire (28a).

8. Procédé selon la revendication 7,
**caractérisé en ce que** dans une étape de procédé supplémentaire, l'au moins un premier élément d'entraînement (42a', 43a') est désaccouplé du premier emballage (44a', 44a''') opposé à la direction de transport (36a) et l'au moins un deuxième élément d'entraînement (42a", 43a") est désaccouplé du deuxième emballage (44a", 44a"") opposé à la direction de transport (36a) une fois l'agencement de groupes d'emballages supplémentaire (26a) atteint dans la portion de section de transport supplémentaire (28a).

9. Procédé selon la revendication 8,
**caractérisé en ce que** dans une étape de procédé supplémentaire, les éléments d'entraînement désaccouplés (42a', 43a', 42a", 43a") sont transférés dans une direction de retour (38a) de la portion de section de transport supplémentaire (28a) dans la première portion de section de transport (24a).
